(19) Europäisches Patentamt
European Patent Office
Office européen des brevets

(11) EP 4 583 234 A1

(12) **EUROPEAN PATENT APPLICATION**
published in accordance with Art. 153(4) EPC

(43) Date of publication:
**09.07.2025 Bulletin 2025/28**

(21) Application number: **23860083.7**

(22) Date of filing: **18.08.2023**

(51) International Patent Classification (IPC):
***H01M 10/0585*** (2010.01) ***H01M 4/13*** (2010.01)
***H01M 4/139*** (2010.01) ***H01M 4/36*** (2006.01)
***H01M 4/62*** (2006.01) ***H01M 10/052*** (2010.01)

(52) Cooperative Patent Classification (CPC):
**H01M 10/0569; H01M 4/0404; H01M 4/13; H01M 4/139; H01M 4/36; H01M 4/62; H01M 10/052; H01M 10/0525; H01M 10/0585;**
H01M 2300/004; Y02E 60/10; Y02P 70/50

(86) International application number:
**PCT/JP2023/029815**

(87) International publication number:
**WO 2024/048320 (07.03.2024 Gazette 2024/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.08.2022 JP 2022136375**

(71) Applicant: **FUJIFILM Corporation**
**Tokyo 106-8620 (JP)**

(72) Inventor: **YAWATA, Toshihiko**
**Minamiashigara-shi, Kanagawa 250-0193 (JP)**

(74) Representative: **HGF**
**HGF Limited**
**1 City Walk**
**Leeds LS11 9DX (GB)**

# (54) METHOD FOR PRODUCING NONAQUEOUS ELECTROLYTE SECONDARY BATTERY, SLURRY FOR NONAQUEOUS ELECTROLYTE SECONDARY BATTERIES, AND NONAQUEOUS ELECTROLYTE SECONDARY BATTERY

(57) Provided are a non-aqueous electrolytic solution secondary battery including, in the following order, a positive electrode slurry layer, a separator, and a negative electrode slurry layer, in which the positive electrode slurry layer consists of a slurry obtained by dispersing a positive electrode active material in a non-aqueous electrolytic solution containing a solvent having a relative permittivity of 5.0 or more and a viscosity of less than 2.0 mPa·s, and the negative electrode slurry layer consists of a slurry obtained by dispersing a negative electrode active material in a non-aqueous electrolytic solution containing a solvent having a relative permittivity of 5.0 or more and a viscosity of less than 2.0 mPa·s; a manufacturing method of the non-aqueous electrolytic solution secondary battery; and a slurry suitable for forming the electrode slurry layer of the non-aqueous electrolytic solution secondary battery.

FIG. 1

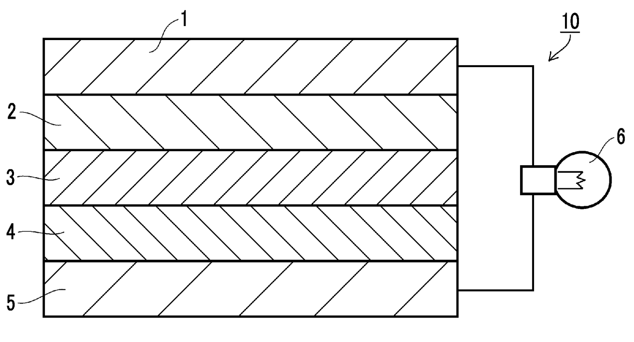




Processed by Luminess, 75001 PARIS (FR)

## Description

### BACKGROUND OF THE INVENTION

1. Field of the Invention

The present invention relates to a manufacturing method of a non-aqueous electrolytic solution secondary battery, a slurry for a non-aqueous electrolytic solution secondary battery, and a non-aqueous electrolytic solution secondary battery.

2. Description of the Related Art

A non-aqueous electrolytic solution secondary battery has a structure in which a positive electrode collector, a positive electrode active material layer, a separator, a negative electrode active material layer, and a negative electrode collector are laminated in this order. The positive electrode active material layer and the negative electrode active material layer are filled with a non-aqueous electrolytic solution and are separated by the separator. The separator has pores and functions as a positive negative electrode-separating film which insulates the positive electrode and the negative electrode from each other while allowing transmission of the non-aqueous electrolytic solution and ions in a state in which a typical battery is used. Charging and discharging can be performed by reciprocating ions between the positive electrode and the negative electrode. A lithium ion secondary battery is widely used at present, and lithium ions reciprocate between the positive electrode and the negative electrode to repeat charging and discharging.

A technique for increasing a capacity of the non-aqueous electrolytic solution secondary battery has been studied. For example, JP2017-147222A discloses an electrochemical cell including a positive electrode consisting of a non-bonded body which contains a first active material and an electrolytic solution in a first non-aqueous liquid electrolyte; a negative electrode consisting of a non-bonded body which contains a second active material and an electrolytic solution in a second non-aqueous liquid electrolyte; and an ion permeable membrane disposed between the positive electrode and the negative electrode, in which the positive electrode and the negative electrode each have a thickness of approximately 200 $\mu$m to approximately 3,000 $\mu$m.

According to the technique disclosed in JP2017-147222A, since an electrode active material layer (a positive electrode active material layer and a negative electrode active material layer) is in a non-bonded state as in the positive electrode and the negative electrode, the electrode active material layer can be formed into a thick film while maintaining flexibility of the electrode active material layer, a binder which bonds solid particles is not required, and the charge capacity and the entire energy density can be significantly increased while maintaining the flexibility of the battery.

### SUMMARY OF THE INVENTION

As disclosed in JP2017-147222A, the present inventors have repeatedly studied a battery (also referred to as "semi-solid state secondary battery" in the present specification) in which an electrode active material layer is formed as an electrode slurry layer obtained by dispersing an electrode active material in a non-aqueous electrolytic solution to achieve an increase in capacity. As a result, it has been found that, although the capacity of the battery can be increased depending on the configuration of the semi-solid state secondary battery, a decrease in discharge capacity cannot be sufficiently suppressed in a case of performing the high current discharging, and there is room for improvement in the output characteristics. As a result of studies to deal with the problem, it has been found that the output characteristics are improved by containing, as a solvent of the non-aqueous electrolytic solution, a solvent having a high dielectric constant and a low viscosity, but a new problem has arisen in that the use of a solvent having a high dielectric constant and a low viscosity in the non-aqueous electrolytic solution is likely to cause a decrease in discharge capacity due to repeated charging and discharging.

An object of the present invention is to provide a manufacturing method of a non-aqueous electrolytic solution secondary battery in which an electrode slurry layer obtained by dispersing an electrode active material in a non-aqueous electrolytic solution is used as an electrode active material layer to achieve an increase in capacity, in which cycle characteristics can be sufficiently enhanced while enhancing output characteristics of the non-aqueous electrolytic solution secondary battery; and to provide a non-aqueous electrolytic solution secondary battery in which cycle characteristics can be sufficiently enhanced while enhancing output characteristics. Another object of the present invention is to provide a slurry suitable for forming the electrode slurry layer of the non-aqueous electrolytic solution secondary battery.

The above-described objects of the present invention have been achieved by the following means.

[1] A manufacturing method of a non-aqueous electrolytic solution secondary battery, comprising the following (a1) to

(c1):

(a1) obtaining a positive electrode layer member consisting of a laminate of a positive electrode collector and a positive electrode slurry layer obtained by dispersing a positive electrode active material in a non-aqueous electrolytic solution in which at least a part of solvents has a relative permittivity of 5.0 or more and a viscosity of less than 2.0 mPa·s;
(b1) forming a laminated structure of a negative electrode collector and a slurry layer for a negative electrode, which is obtained by dispersing a negative electrode active material in a non-aqueous electrolytic solution in which a solvent has a relative permittivity of less than 5.0 and/or a viscosity of 2.0 mPa·s or more, and obtaining a negative electrode layer member consisting of a laminate of the negative electrode collector and a negative electrode slurry layer by adding, to the slurry layer for a negative electrode, a solvent having a relative permittivity of 5.0 or more and a viscosity of less than 2.0 mPa·s; and
(c1) laminating the positive electrode layer member, a separator, and the negative electrode layer member to form a laminated structure in which one side of the separator and the positive electrode slurry layer are in contact with each other and the other side of the separator and the negative electrode slurry layer are in contact with each other.

[2] A manufacturing method of a non-aqueous electrolytic solution secondary battery, comprising the following (a2) to (c2):

(a2) obtaining a positive electrode layer member consisting of a laminate of a positive electrode collector and a positive electrode slurry layer obtained by dispersing a positive electrode active material in a non-aqueous electrolytic solution in which a proportion of a solvent having a relative permittivity of 5.0 or more and a viscosity of less than 2.0 mPa·s with respect to solvents is X% by mass;
(b2) obtaining a negative electrode layer member consisting of a laminate of a negative electrode collector and a negative electrode slurry layer obtained by dispersing a negative electrode active material in a non-aqueous electrolytic solution in which a proportion of a solvent having a relative permittivity of 5.0 or more and a viscosity of less than 2.0 mPa·s with respect to solvents is lower than X% by mass; and
(c2) laminating the positive electrode layer member, a separator, and the negative electrode layer member to form a laminated structure in which one side of the separator and the positive electrode slurry layer are in contact with each other and the other side of the separator and the negative electrode slurry layer are in contact with each other.

[3] The manufacturing method of a non-aqueous electrolytic solution secondary battery according to [1] or [2],
in which, in the laminated structure formed by (c1) and (c2), a thickness of the positive electrode slurry layer is 150 μm or more.
[4] The manufacturing method of a non-aqueous electrolytic solution secondary battery according to any one of [1] to [3],
in which the solvent having a relative permittivity of 5.0 or more and a viscosity of less than 2.0 mPa·s includes a compound having at least one of a cyano group, an ester bond, or an ether bond.
[5] The manufacturing method of a non-aqueous electrolytic solution secondary battery according to [4],

in which the compound having at least one of a cyano group, an ester bond, or an ether bond is a compound represented by any one of Formulae (1) to (3),

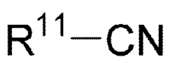
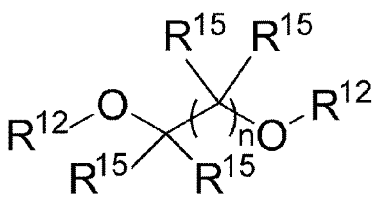
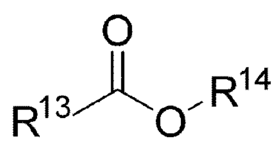

Formula (1) Formula (2) Formula (3)

in the formulae, $R^{11}$ to $R^{14}$ represent an alkyl group having 1 to 3 carbon atoms, $R^{15}$ represents a hydrogen atom or a fluorine atom, and n represents an integer of 1 to 3, in Formula (2), two $R^{12}$'s may be linked to each other to form a ring, in Formula (3), $R^{13}$ and $R^{14}$ may be linked to each other to form a ring.

[6] The manufacturing method of a non-aqueous electrolytic solution secondary battery according to any one of [1] to [5],
in which, in (a1) and (a2), an ion conductivity of the non-aqueous electrolytic solution constituting the positive electrode slurry layer is 12 mS/cm or more.
[7] The manufacturing method of a non-aqueous electrolytic solution secondary battery according to any one of [1] to [6],
in which a content of an electrolyte in the non-aqueous electrolytic solution constituting the positive electrode slurry layer in (a1) and (a2) and a content of an electrolyte in the non-aqueous electrolytic solution constituting the negative electrode slurry layer in (b1) and (b2) are 0.9 M or more.
[8] The manufacturing method of a non-aqueous electrolytic solution secondary battery according to any one of [1] to [7],
in which an additive which reacts with a surface of the negative electrode active material to form a coating film is added to the non-aqueous electrolytic solution constituting the positive electrode slurry layer in (a1) and (a2) and to the non-aqueous electrolytic solution constituting the negative electrode slurry layer in (b1) and (b2).
[9] The manufacturing method of a non-aqueous electrolytic solution secondary battery according to [8],
in which a content of the additive in the non-aqueous electrolytic solution constituting the positive electrode slurry layer and in the non-aqueous electrolytic solution constituting the negative electrode slurry layer is 2% to 28% by mass.
[10] The manufacturing method of a non-aqueous electrolytic solution secondary battery according to any one of [2] to [9],
in which, in the negative electrode slurry layer in (b2), the proportion of the solvent having a relative permittivity of 5.0 or more and a viscosity of less than 2.0 mPa·s with respect to the solvents is less than 20% by mass.
[11] The manufacturing method of a non-aqueous electrolytic solution secondary battery according to any one of [1] to [10], further comprising, after (c1) and (c2):
performing CV charging at a potential higher than a reduction potential of the solvent having a relative permittivity of 5.0 or more and a viscosity of less than 2.0 mPa·s.
[12] The manufacturing method of a non-aqueous electrolytic solution secondary battery according to any one of [1] to [11],
in which both the positive electrode slurry layer and the negative electrode slurry layer in the obtained non-aqueous electrolytic solution secondary battery contain acetonitrile.
[13] A slurry for a non-aqueous electrolytic solution secondary battery, comprising:

a non-aqueous electrolytic solution containing a solvent having a relative permittivity of 5.0 or more and a viscosity of less than 2.0 mPa·s; and
an electrode active material.

[14] The slurry for a non-aqueous electrolytic solution secondary battery according to [13],
in which the electrode active material is a positive electrode active material, and a proportion of the solvent having a relative permittivity of 5.0 or more and a viscosity of less than 2.0 mPa·s with respect to solvents is 8% by mass or more.
[15] The slurry for a non-aqueous electrolytic solution secondary battery according to [13],
in which the electrode active material is a negative electrode active material, and a proportion of the solvent having a relative permittivity of 5.0 or more and a viscosity of less than 2.0 mPa·s with respect to solvents is less than 20% by mass.
[16] The slurry for a non-aqueous electrolytic solution secondary battery according to any one of [13] to [15],
in which a content of the electrode active material in the slurry is 40% by volume or more.
[17] The slurry for a non-aqueous electrolytic solution secondary battery according to any one of [13] to [16],
in which the solvent having a relative permittivity of 5.0 or more and a viscosity of less than 2.0 mPa·s includes acetonitrile.
[18] The slurry for a non-aqueous electrolytic solution secondary battery according to any one of [13] to [17],
in which the slurry is used for forming an electrode slurry layer of a non-aqueous electrolytic solution secondary battery.
[19] A non-aqueous electrolytic solution secondary battery comprising, in the following order:

a positive electrode slurry layer;
a separator; and
a negative electrode slurry layer,
in which the positive electrode slurry layer consists of a slurry obtained by dispersing a positive electrode active material in a non-aqueous electrolytic solution containing a solvent having a relative permittivity of 5.0 or more and a viscosity of less than 2.0 mPa·s, and

the negative electrode slurry layer consists of a slurry obtained by dispersing a negative electrode active material in a non-aqueous electrolytic solution containing a solvent having a relative permittivity of 5.0 or more and a viscosity of less than 2.0 mPa·s.

[20] The non-aqueous electrolytic solution secondary battery according to [19],
in which both the solvent having a relative permittivity of 5.0 or more and a viscosity of less than 2.0 mPa·s, contained in the positive electrode slurry layer, and the solvent having a relative permittivity of 5.0 or more and a viscosity of less than 2.0 mPa·s, contained in the negative electrode slurry layer, include acetonitrile.
[21] The non-aqueous electrolytic solution secondary battery according to [19] or [20],
in which, in a case where a proportion of the solvent having a relative permittivity of 5.0 or more and a viscosity of less than 2.0 mPa·s with respect to solvents of the positive electrode slurry layer is denoted by $X^a$% by mass and a proportion of the solvent having a relative permittivity of 5.0 or more and a viscosity of less than 2.0 mPa·s with respect to solvents of the negative electrode slurry layer is denoted by $X^b$% by mass, $X^a > X^b$ is satisfied.

In the present invention and the present specification, any numerical range expressed using "to" refers to a range including the numerical values before and after the "to" as a lower limit value and an upper limit value, respectively.
In the present invention and the present specification, "non-aqueous electrolytic solution" means an electrolytic solution which does not substantially contain water. That is, the "non-aqueous electrolytic solution" may contain a trace of water within a range that does not impair the effects of the present invention. The concentration of water in the "non-aqueous electrolytic solution" in the present invention is 200 ppm (based on mass) or less, preferably 100 ppm or less, and more preferably 20 ppm or less. The concentration of water is usually 1 ppm or more, because it is practically difficult to make an absolutely anhydrous non-aqueous electrolytic solution.
In the present invention and the present specification, "electrolytic solution" consists of a solvent constituting the electrolytic solution and components dissolved in the solvent. For example, in a case where the electrolytic solution contains a solvent, an electrolyte dissolved in the solvent, and further an additive (solute other than the electrolyte) dissolved in the solvent, the additive is a constituent component of the electrolytic solution.
According to the manufacturing method of a non-aqueous electrolytic solution secondary battery of the aspect of the present invention, in a battery configuration in which an electrode slurry layer is used as an electrode active material layer, it is possible to obtain a non-aqueous electrolytic solution secondary battery having excellent output characteristics and excellent cycle characteristics. In addition, the non-aqueous electrolytic solution secondary battery according to the aspect of the present invention has a battery configuration in which an electrode slurry layer is used as an electrode active material layer, and has excellent output characteristics and excellent cycle characteristics. In addition, the slurry according to the aspect of the present invention is suitable for forming an electrode slurry layer of the above-described non-aqueous electrolytic solution secondary battery.

## BRIEF DESCRIPTION OF THE DRAWINGS

Fig. 1 is a longitudinal cross-sectional view schematically showing a basic structure of a non-aqueous electrolytic solution secondary battery according to an embodiment of the present invention.

## DESCRIPTION OF THE PREFERRED EMBODIMENTS

[Manufacturing method of non-aqueous electrolytic solution secondary battery]

Fig. 1 is a schematic cross-sectional view showing a laminated structure of a general non-aqueous electrolytic solution secondary battery 10, including a working electrode which acts in a case where the battery is operated. The non-aqueous electrolytic solution secondary battery 10 has a laminated structure in which a negative electrode collector 1, a negative electrode active material layer 2, a separator 3, a positive electrode active material layer 4, and a positive electrode collector 5 are laminated in this order from the negative electrode side. The negative electrode active material layer 2 and the positive electrode active material layer 4 are filled with a non-aqueous electrolytic solution (not shown), and are separated by the separator 3. The separator 3 has pores and functions as a positive negative electrode-separating film which insulates the positive electrode and the negative electrode from each other while allowing transmission of the electrolytic solution and ions in a state in which a typical battery is used. With such a structure, for example, in the case of lithium ion secondary battery, during charge, while electrons ($e^-$) are supplied to the negative electrode side through an external circuit, lithium ions ($Li^+$) move from the positive electrode through the electrolytic solution and are accumulated in the negative electrode. On the other hand, during discharge, while the lithium ions ($Li^+$) accumulated in the negative electrode are returned to the positive electrode side through the electrolytic solution, electrons are supplied to an operation portion 6. In the example shown in the drawing, a light bulb is adopted as the operation portion 6, which is turned on by the

discharge.

In the present invention and the present specification, the negative electrode collector 1 and the negative electrode active material layer 2 are collectively referred to as a negative electrode or a negative electrode layer; the positive electrode active material layer 4 and the positive electrode collector 5 are collectively referred to as a positive electrode or a positive electrode layer; and the negative electrode and the positive electrode are collectively referred to as an electrode or an electrode layer. In addition, the negative electrode active material layer 2 and the positive electrode active material layer 4 are collectively referred to as an electrode active material layer.

Next, a basic configuration of a non-aqueous electrolytic solution secondary battery (also referred to as "secondary battery according to the embodiment of the present invention"), which is characteristic of a non-aqueous electrolytic solution secondary battery obtained by the manufacturing method of a non-aqueous electrolytic solution secondary battery according to the embodiment of the present invention (hereinafter, also referred to as "manufacturing method according to the embodiment of the present invention") will be described. In the secondary battery according to the embodiment of the present invention, as described above, the electrode active material layer is an electrode slurry layer in which an electrode active material is dispersed in a non-aqueous electrolytic solution. Therefore, the secondary battery according to the embodiment of the present invention is different from a general non-aqueous electrolytic solution secondary battery in terms of the fact that the electrode active material layer is a slurry (suspension or dispersion liquid) obtained by dispersing the electrode active material in a non-aqueous electrolytic solution.

That is, in a general non-aqueous electrolytic solution secondary battery, a coating liquid is prepared in which the electrode active material is dispersed in a medium containing no electrolyte, the coating liquid is applied onto a collector to form a coating film, and then the coating film is dried to form a thin film-shaped electrode active material layer. The coating liquid is usually blended with a binding material (binder), and a hard electrode active material layer in which electrode active material particles are firmly bound to each other is formed. Since the non-aqueous electrolytic solution is present on the electrode active material layer formed in this way (between the negative electrode active material layer and the positive electrode active material layer), the electrode active material layer is in a state of a hard solid particle layer as a whole even in a case where there is a portion in which the non-aqueous electrolytic solution can permeate, and is not a slurry layer.

On the other hand, in the secondary battery according to the embodiment of the present invention, the electrode active material layer is an electrode slurry layer using the non-aqueous electrolytic solution as a medium. In a case where the electrode slurry layer functions as the electrode active material layer, a strong bonding property is not required between the electrode active material particles, and thus the electrode slurry layer generally does not contain a binding material. The basic layer configuration of the secondary battery according to the embodiment of the present invention is the same as the layer configuration shown in Fig. 1, except that the electrode active material layer is an electrode slurry layer and the electrode slurry layer and the separator are in contact with each other.

As each of the materials, the non-aqueous electrolytic solution, the members, and the like used in the non-aqueous electrolytic solution secondary battery according to the embodiment of the present invention, those used in a typical non-aqueous electrolytic solution secondary battery can be appropriately applied except for a formulation of solvents used in the non-aqueous electrolytic solution. In addition, in the manufacturing method of a non-aqueous electrolytic solution secondary battery according to the embodiment of the present invention, a typical method can be appropriately adopted except that the electrode active material layer is formed as a slurry layer having a specific solvent formulation. For example, JP2016-201308A, JP2005-108835A, JP2012-185938A, JP2017-147222A, and the like can be appropriately referred to.

Next, preferred embodiments of the manufacturing method according to the embodiment of the present invention will be described.

The manufacturing method according to the embodiment of the present invention includes the following steps (a1) to (c1) as a preferred embodiment (also referred to as "first embodiment"). In the first embodiment, the order in which the steps (a1) and (b1) are performed is not limited; and the positive electrode layer member may be obtained by performing the step (a1) and then the negative electrode layer member may be obtained by performing the step (b1), or the negative electrode layer member may be obtained by performing the step (b1) and then the positive electrode layer member may be obtained by performing the step (a1), or the steps (a1) and (b1) may be performed simultaneously and in parallel.

(a1) obtaining a positive electrode layer member consisting of a laminate of a positive electrode collector and a positive electrode slurry layer obtained by dispersing a positive electrode active material in a non-aqueous electrolytic solution in which at least a part of solvents has a relative permittivity of 5 or more and a viscosity of less than 2 mPa·s

(b1) forming a laminated structure of a negative electrode collector and a slurry layer for a negative electrode, which is obtained by dispersing a negative electrode active material in a non-aqueous electrolytic solution in which a solvent has a relative permittivity of less than 5.0 and/or a viscosity of 2.0 mPa·s or more, and obtaining a negative electrode layer member consisting of a laminate of the negative electrode collector and a negative electrode slurry layer by adding, to the slurry layer for a negative electrode, a solvent having a relative permittivity of 5.0 or more and a viscosity

of less than 2.0 mPa·s

(c1) laminating the positive electrode layer member, a separator, and the negative electrode layer member to form a laminated structure in which one side of the separator and the positive electrode slurry layer are in contact with each other and the other side of the separator and the negative electrode slurry layer are in contact with each other.

The above-described steps (a1) to (c1) will be described in detail.

<Step (a1)>

The step (a1) is a step of obtaining a positive electrode layer member consisting of a laminate of a positive electrode collector and a positive electrode slurry layer. At least a part of solvents of a non-aqueous electrolytic solution constituting the positive electrode slurry layer is a solvent having a relative permittivity of 5.0 or more and a viscosity of less than 2.0 mPa·s.

(Solvent having relative permittivity of 5.0 or more and viscosity of less than 2.0 mPa·s)

The solvent having a relative permittivity of 5.0 or more and a viscosity of less than 2.0 mPa·s (also referred to as "high-dielectric constant and low-viscosity solvent") has a relative permittivity of 5.0 or more and a viscosity of less than 2.0 mPa·s. The relative permittivity and the viscosity are determined by methods described in Examples later.

The relative permittivity of the high-dielectric constant and low-viscosity solvent constituting the positive electrode slurry layer is more preferably 6.0 or more, and still more preferably 6.5 or more. In addition, the relative permittivity thereof is also preferably 7.0 or more, 10.0 or more, 15.0 or more, or 20.0 or more. In addition, the relative permittivity thereof is usually 60.0 or less, preferably 50.0 or less, more preferably 45.0 or less, and also preferably 40.0 or less. In a case where the relative permittivity thereof is shown as a preferable range, the relative permittivity is preferably 5.0 to 60.0, more preferably 6.0 to 60.0, still more preferably 6.5 to 50.0, also preferably 7.0 to 45.0, also preferably 10.0 to 45.0, also preferably 15.0 to 45.0, and also preferably 20.0 to 40.0.

The viscosity of the high-dielectric constant and low-viscosity solvent constituting the positive electrode slurry layer is preferably 1.5 mPa·s or less, more preferably 1.2 mPa·s or less, still more preferably 1.0 mPa·s or less, even more preferably 0.8 mPa·s or less, even still more preferably 0.7 mPa·s or less, further still more preferably 0.6 mPa·s or less, and even further more preferably 0.5 mPa·s or less. In addition, the viscosity thereof is usually 0.1 mPa·s or more, preferably 0.2 mPa·s or more, and more preferably 0.3 mPa·s or more. In a case where the viscosity thereof is shown as a preferred range, the viscosity is preferably 0.1 mPa·s or more and less than 2.0 mPa·s, more preferably 0.2 to 1.5 mPa·s, still more preferably 0.2 to 1.2 mPa·s, even more preferably 0.2 to 1.0 mPa·s, even still more preferably 0.2 to 0.8 mPa·s, further more preferably 0.3 to 0.7 mPa·s, even further more preferably 0.3 to 0.6 mPa·s, and particularly preferably 0.3 to 0.5 mPa·s.

As the high-dielectric constant and low-viscosity solvent constituting the positive electrode slurry layer, it is preferable to use a compound having at least one of a cyano group, an ester bond, or an ether bond. It is more preferable that all of the high-dielectric constant and low-viscosity solvents constituting the positive electrode slurry layer are compounds having at least one of a cyano group, an ester bond, or an ether bond.

The compound having at least one of a cyano group, an ester bond, or an ether bond, which is suitable as the high-dielectric constant and low-viscosity solvent, is preferably a compound represented by any of Formulae (1) to (3).

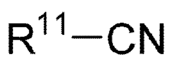

Formula (1)

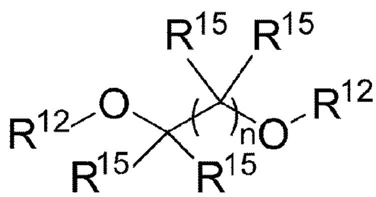

Formula (2)

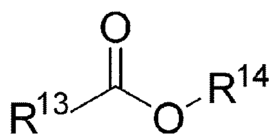

Formula (3)

In the formulae, $R^{11}$ to $R^{14}$ represent an alkyl group having 1 to 3 carbon atoms, $R^{15}$ represents a hydrogen atom or a fluorine atom, and n represents an integer of 1 to 3. In Formula (2), two $R^{12}$'s may be linked to each other to form a ring. In Formula (3), $R^{13}$ and $R^{14}$ may be linked to each other to form a ring.

In Formula (1), the alkyl group having 1 to 3 carbon atoms, which can be adopted as $R^{11}$, is preferably methyl, ethyl, i-propyl, or n-propyl, or a group in which one or more hydrogen atoms in these groups are substituted with a fluorine atom. The alkyl group having a fluorine atom may be a perfluoroalkyl group, and it is also preferable that the alkyl group is a

group in which a part of hydrogen atoms in the alkyl group is substituted with a fluorine atom. The number of fluorine atoms in the alkyl group having a fluorine atom is preferably 1 to 5 and more preferably 1 to 3.

In Formula (2), the alkyl group having 1 to 3 carbon atoms, which can be adopted as $R^{12}$, is preferably methyl or ethyl, or a group in which one or more hydrogen atoms in these groups are substituted with a fluorine atom. The alkyl group having a fluorine atom may be a perfluoroalkyl group, and it is also preferable that the alkyl group is a group in which a part of hydrogen atoms in the alkyl group is substituted with a fluorine atom. The number of fluorine atoms in the alkyl group having a fluorine atom is preferably 1 to 5 and more preferably 1 to 3.

n is preferably 1 or 2, and more preferably 1.

In a case where two $R^{12}$'s in Formula (2) are linked to each other to form a ring, the number of ring members in the formed ring is preferably 5 to 10, more preferably 5 to 8, still more preferably 5 or 6, and even more preferably 6. The ring formed by linking two $R^{12}$'s to each other is particularly preferably 1,4-dioxane. In Formula (2), four $R^{15}$'s may be the same or different from each other, and are preferably the same.

In Formula (3), the alkyl group having 1 to 3 carbon atoms, which can be adopted as $R^{13}$ and $R^{14}$, is preferably methyl or ethyl, or a group in which one or more hydrogen atoms in these groups are substituted with a fluorine atom. The alkyl group having a fluorine atom may be a perfluoroalkyl group, and it is also preferable that the alkyl group is a group in which a part of hydrogen atoms in the alkyl group is substituted with a fluorine atom. The number of fluorine atoms in the alkyl group having a fluorine atom is preferably 1 to 5 and more preferably 1 to 3. In a case where $R^{13}$ and $R^{14}$ in Formula (3) are linked to each other to form a ring, the number of ring members in the formed ring is preferably 5 to 10, more preferably 5 to 8, and still more preferably 5 or 6. The ring formed by linking $R^{13}$ and $R^{14}$ to each other is particularly preferably γ-butyrolactone or δ-valerolactone.

Preferred specific examples of the compound represented by each of Formulae (1) to (3) are shown below. In the notation of the following compounds, Me represents methyl and Et represents ethyl.

$Me-CN$ $Et-CN$ 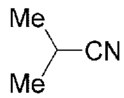 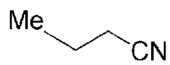

$FH_2C-CN$ 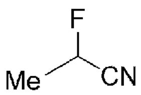 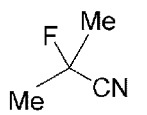 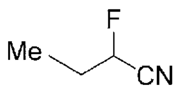 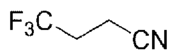

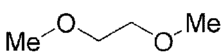 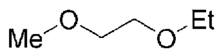 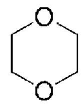 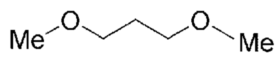

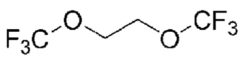 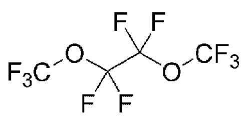 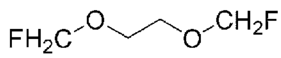

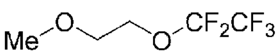 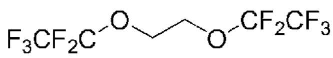 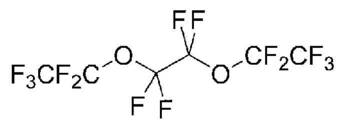

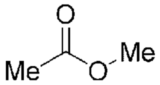 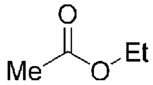 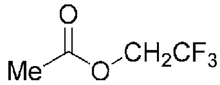 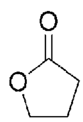 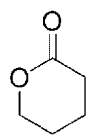

As the solvent constituting the positive electrode slurry layer, one kind or two or more kinds of the above-described high-dielectric constant and low-viscosity solvent can be used.

The above-described high-dielectric constant and low-viscosity solvent preferably includes acetonitrile, propionitrile, or isobutyronitrile, and more preferably acetonitrile.

The high-dielectric constant and low-viscosity solvent described in the step (a1) is not limited to the step (a1), and is applied as a description of the high-dielectric constant and low-viscosity solvent in all steps. That is, in the present

invention or the present specification, the "solvent having a relative permittivity of 5.0 or more and a viscosity of less than 2.0 mPa·s" refers to the high-dielectric constant and low-viscosity solvent described above.

(Non-aqueous electrolytic solution)

In the step (a1), it is preferable that the non-aqueous electrolytic solution constituting the positive electrode slurry layer contains the above-described high-dielectric constant and low-viscosity solvent as a solvent, and further contains another solvent (a solvent having a relative permittivity of less than 5.0 and/or a viscosity of 2.0 mPa·s or more). The above-described high-dielectric constant and low-viscosity solvent may be contained in the non-aqueous electrolytic solution from the time of applying the slurry onto the collector in the formation of the positive electrode slurry layer, or may be added and contained in the slurry after the slurry has been applied in the formation of the positive electrode slurry. The solvent and the electrolyte of the non-aqueous electrolytic solution constituting the positive electrode slurry layer will be described in order.

-Solvent-

In the step (a1), at least a part of solvents contained in the non-aqueous electrolytic solution constituting the positive electrode slurry layer (synonymous with solvents constituting the positive electrode slurry layer) is the above-described high-dielectric constant and low-viscosity solvent. In the positive electrode slurry layer formed in the step (a1), a proportion of the above-described high-dielectric constant and low-viscosity solvent with respect to the solvents (with respect to the total solvent) is preferably 70% by mass or less, more preferably 60% by mass or less, still more preferably 50% by mass or less, even more preferably 40% by mass or less, even still more preferably 35% by mass or less, also preferably 30% by mass or less, also preferably 25% by mass or less, and also preferably 20% by mass or less. In addition, the proportion thereof is preferably 5% by mass or more, more preferably 8% by mass or more, still more preferably 10% by mass or more, even more preferably 12% by mass or more, even still more preferably 14% by mass or more, also preferably 16% by mass or more, and also preferably 18% by mass or more. In the positive electrode slurry layer formed in the step (a1), in a case where the above-described proportion of the above-described high-dielectric constant and low-viscosity solvent with respect the solvents is shown as a preferred range, the proportion is preferably 5% to 70% by mass, more preferably 8% to 60% by mass, still more preferably 10% to 50% by mass, even more preferably 12% to 40% by mass, even still more preferably 14% to 35% by mass, also preferably 16% to 30% by mass, also preferably 18% to 25% by mass, and also preferably 18% to 20% by mass. In addition, the proportion thereof is also preferably 5% to 60% by mass, also preferably 5% to 50% by mass, also preferably 5% to 40% by mass, also preferably 5% to 35% by mass, also preferably 5% to 30% by mass, also preferably 5% to 25% by mass, and also preferably 5% to 20% by mass.

In the positive electrode slurry layer formed in the step (a1), as the solvent other than the above-described high-dielectric constant and low-viscosity solvent (the solvent having a relative permittivity of less than 5.0 and/or a viscosity of 2.0 mPa·s or more), a solvent which is usually used in the non-aqueous electrolytic solution can be widely used. For example, a non-protonic organic solvent having a relative permittivity of less than 5.0 and/or a viscosity of 2.0 mPa·s or more can be preferably used, and the non-protonic organic solvent preferably has 2 to 10 carbon atoms. Suitable examples of the solvent other than the above-described high-dielectric constant and low-viscosity solvent include a chain-like or cyclic carbonate compound; and specific examples thereof include ethylene carbonate and dimethyl carbonate. In the present invention, a vinylene carbonate is classified as an additive (a coating film forming agent) instead of the solvent. That is, even a compound which can act as the solvent is classified as an additive (a coating film forming agent) instead of the solvent in a case where the compound reacts sacrificially with the solvent, such as ethylene carbonate and dimethyl carbonate, and forms a coating film on the surface of the active material (a reduction rate during initial charging and discharging is higher than that of the solvent such as ethylene carbonate and dimethyl carbonate, and a coating film is formed on the surface of the negative electrode).

-Electrolyte-

The electrolyte used in the non-aqueous electrolytic solution is preferably a salt of a metal ion belonging to Group 1 or Group 2 of the periodic table. The salt of the metal ion to be used is appropriately selected depending on the purpose of use of the non-aqueous electrolytic solution. Examples thereof include a lithium salt, a potassium salt, a sodium salt, a calcium salt, and a magnesium salt; and a lithium salt is preferable from the viewpoint of output in a case of being used for the non-aqueous electrolytic solution secondary battery or the like. In a case where the non-aqueous electrolytic solution is used as a non-aqueous electrolytic solution for a lithium ion secondary battery, a lithium salt is selected as the salt of the metal ion. As the lithium salt, a lithium salt usually used as an electrolyte of a non-aqueous electrolytic solution for a lithium ion secondary battery can be used. Specific examples thereof are shown below.

(L-1) Inorganic lithium salt: inorganic fluoride salt such as $LiPF_6$, $LiBF_4$, $LiAsF_6$, and $LiSbF_6$; perhalogenate such as $LiClO_4$, $LiBrO_4$, and $LiIO_4$; an inorganic chloride salt such as $LiAlCl_4$; and the like

(L-2) Fluorine-containing organic lithium salt: perfluoroalkane sulfonate such as $LiCF_3SO_3$; perfluoroalkanesulfonylimide salt such as $LiN(CF_3SO_2)_2$, $LiN(CF_3CF_2SO_2)_2$, $LiN(FSO_2)_2$, and $LiN(CF_3SO_2)(C_4F9SO_2)$; perfluoroalkane sulfonylmethide salt such as $LiC(CF_3SO_2)_3$; fluoroalkyl fluorophosphate such as $Li[PF_5(CF_2CF_2CF_3)]$, $Li[PF_4(CF_2CF_2CF_3)_2]$, $Li[PF_3(CF_2CF_2CF_3)_3]$, $Li[PF5(CF_2CF_2CF_2CF_3)]$, $Li[PF_4(CF_2CF_2CF_2CF_3)_2]$, and $Li[PF_3(CF_2CF_2CF_2CF_3)_3]$; and the like

(L-3) Oxalatoborate salt: lithium bis(oxalato)borate, lithium difluorooxalatoborate, and the like

Among these, $LiPF_6$, $LiBF_4$, $LiAsF_6$, $LiSbF_6$, $LiClO_4$, $Li(Rf1SO_3)$, $LiN(Rf1SO_2)_2$, $LiN(FSO_2)_2$, or $LiN(Rf1SO_2)(Rf2SO_2)$ is preferable; and $LiPF_6$, $LiBF_4$, $LiN(Rf1SO_2)_2$, $LiN(FSO_2)_2$, or $LiN(Rf1SO_2)(Rf2SO_3)$ is more preferable. Here, Rf1 and Rf2 each represent a perfluoroalkyl group.

As the electrolyte used in the non-aqueous electrolytic solution, one kind of electrolyte may be used alone, or two or more kinds of electrolytes may be arbitrarily combined.

A concentration of the electrolyte in the non-aqueous electrolytic solution is appropriately selected depending on intended use of the non-aqueous electrolytic solution. In general, the concentration is preferably 0.5 to 1.5 M (mol/L) in the non-aqueous electrolytic solution. In addition, the concentration of the electrolyte in the non-aqueous electrolytic solution is preferably 0.9 M or more, more preferably 0.9 to 1.5 M, still more preferably 1.0 to 1.5 M, and even more preferably 1.1 to 1.4 M.

In the step (a1), an ion conductivity of the non-aqueous electrolytic solution constituting the positive electrode slurry layer is more preferably 8 mS/cm or more, still more preferably 10 mS/cm or more, and even more preferably 12 mS/cm or more. The ion conductivity thereof is preferably 20 mS/cm or less, more preferably 19 mS/cm or less, and also preferably 18 mS/cm or less. In a case where the ion conductivity thereof is shown as a preferred range, the ion conductivity is preferably 8 to 20 mS/cm, more preferably 8 to 19 mS/cm, still more preferably 10 to 18 mS/cm, and even more preferably 12 to 18 mS/cm. The ion conductivity can be determined by a method described in Examples later.

-Additive-

In the step (a1), it is preferable that the non-aqueous electrolytic solution constituting the positive electrode slurry layer contains an additive (a coating film forming agent; in the following description, simply referred to as "additive", which means the coating film forming agent) which reacts with the surface of the negative electrode active material to form a coating film. Such an additive itself is known, and a commonly used additive can be widely applied. For example, vinylene carbonate, fluoroethylene carbonate, vinyl ethylene carbonate, or the like can be used. A content of the above-described additive in the non-aqueous electrolytic solution constituting the positive electrode slurry layer is preferably 1% to 30% by mass, more preferably 2% to 28% by mass, still more preferably 2% to 26% by mass, even more preferably 3% to 24% by mass, and even still more preferably 4% to 22% by mass.

(Positive electrode active material)

As the positive electrode active material, a positive electrode active material capable of reversibly intercalating and deintercalating lithium ions is preferable. The material is not particularly limited as long as the material has the above-described characteristics, and may be transition metal oxides, organic matter, elements capable of being complexed with Li, such as sulfur, complexes of sulfur and metal, or the like.

Among these, as the positive electrode active material, transition metal oxides are preferably used, and transition metal oxides having a transition metal element $M^a$ (one or more elements selected from Co, Ni, Fe, Mn, Cu, and V) are more preferable. In addition, an element $M^b$ (an element of Group 1 (Ia) of the periodic table other than lithium, an element of Group 2 (IIa), or an element such as Al, Ga, In, Ge, Sn, Pb, Sb, Bi, Si, P, and B) may be mixed into the transition metal oxide. The mixed amount is preferably 0 to 30 mol% with respect to the amount (100 mol%) of the transition metal element $M^a$. It is more preferable that the transition metal oxide is synthesized by mixing the above-described components such that a molar ratio Li/Ma is 0.3 to 2.2.

Specific examples of the transition metal oxide include (MA) transition metal oxides having a bedded salt-type structure, (MB) transition metal oxides having a spinel-type structure, (MC) lithium-containing transition metal phosphoric acid compounds, (MD) lithium-containing transition metal halogenated phosphoric acid compounds, and (ME) lithium-containing transition metal silicate compounds.

Specific examples of the transition metal oxide having a bedded salt-type structure (MA) include $LiCoO_2$ (lithium cobalt oxide [LCO]), $LiNi_2O_2$ (lithium nickelate), $LiNi_{0.85}Co_{0.10}Al_{0.05}O_2$ (lithium nickel cobalt aluminum oxide [NCA]), $LiNi_{1/3}Co_{1/3}Mn_{1/3}O_2$ (lithium nickel manganese cobalt oxide [NMC]), and $LiNi_{0.5}Mn_{0.5}O_2$ (lithium manganese nickelate).

Specific examples of the transition metal oxide having a spinel-type structure (MB) include $LiMn_2O_4$ (LMO),

$LiCoMnO_4$, $Li_2FeMn_3O_8$, $Li_2CuMn_3O_8$, $Li_2CrMn_3O_8$, and $Li_2NiMn_3O_8$.

Examples of the lithium-containing transition metal phosphoric acid compound (MC) include olivine-type iron phosphate salts such as $LiFePO_4$ and $Li_3Fe_2(PO_4)_3$; cobalt phosphates such as $LiCoPO_4$; iron pyrophosphates such as $LiFeP_2O_7$; and monoclinic NASICON-type vanadium phosphate salts such as $Li_3V_2(PO_4)_3$ (lithium vanadium phosphate).

Examples of the lithium-containing transition metal halogenated phosphoric acid compound (MD) include iron fluorophosphates such as $Li_2FePO_4F$, manganese fluorophosphates such as $Li_2MnPO_4F$, and cobalt fluorophosphates such as $Li_2CoPO_4F$.

Examples of the lithium-containing transition metal silicate compound (ME) include $Li_2FeSiO_4$, $Li_2MnSiO_4$, and $Li_2CoSiO_4$.

In the present invention, the transition metal oxide having a bedded salt-type structure (MA) is preferable, and LCO or NMC is more preferable.

A shape of the positive electrode active material is not particularly limited, but is preferably a particle shape. An average particle diameter (sphere-equivalent average particle diameter) of the positive electrode active material is not particularly limited. For example, it can be set to 0.1 to 50 μm. In order to allow the positive electrode active material to have a predetermined particle diameter, a typical pulverizer or classifier may be used. A positive electrode active material obtained using a baking method may be used after being washed with water, an acidic aqueous solution, an alkaline aqueous solution, or an organic solvent.

One kind of the above-described positive electrode active material may be used alone, or two or more kinds thereof may be used in combination.

In a case of forming the positive electrode active material layer, a mass (mg) of the positive electrode active material per unit area ($cm^2$) of the positive electrode active material layer (mass per unit area) is not particularly limited. The mass per unit area can be appropriately determined depending on the designed battery capacity.

In the step (a1), a content of the positive electrode active material in the positive electrode slurry layer is not particularly limited, and is preferably 20% to 70% by volume, more preferably 25% to 65% by volume, still more preferably 30% to 60% by volume, and even more preferably 35% to 55% by volume. In addition, the content of the positive electrode active material in the positive electrode slurry is also preferably 40% by volume or more, more preferably 40% to 60% by volume, and also preferably 40% to 55% by volume.

In the step (a1), a method of forming the laminate (positive electrode layer member) of the positive electrode collector and the positive electrode slurry layer is not particularly limited, and for example, the positive electrode layer member can be obtained by applying a slurry for a positive electrode, containing a constituent component of the positive electrode slurry layer (the solvent, the positive electrode active material, the electrolyte, the additive as necessary, a conductive auxiliary agent, and the like), onto the positive electrode collector to form a coating film having a desired thickness.

A method of applying the slurry is not particularly limited, and for example, the slurry can be applied by using a roll coater, drop coating, pressing (roll pressing or flat plate pressing) the slurry after evenly installing the slurry on the collector, or installing the slurry in a frame having a specified thickness and pressing the slurry.

The solvent of the slurry for a positive electrode may be adjusted such that the formed positive electrode slurry layer contains the above-described high-dielectric constant and low-viscosity solvent in the above-described desired amount. In addition, the solvent of the slurry for a positive electrode may be in a form in which the above-described high-dielectric constant and low-viscosity solvent is at a concentration lower than the above-described desired amount or the high-dielectric constant and low-viscosity solvent is not contained. In this case, after the formation of the coating film with the slurry for a positive electrode, the high-dielectric constant and low-viscosity solvent is added to the coating film, and the concentration of the high-dielectric constant and low-viscosity solvent in the coating film can be increased to the above-described desired level, whereby the positive electrode slurry layer can be obtained.

In the positive electrode layer member obtained in the step (a1), a thickness of the positive electrode slurry layer is preferably 100 μm or more, more preferably 150 μm or more, also preferably 200 μm or more, also preferably 250 μm or more, and also preferably 300 μm or more. In addition, the thickness of the positive electrode slurry layer is usually 1,000 μm or less, preferably 800 μm or less, more preferably 700 μm or less, and may be 650 μm or less. In a case where the thickness of the positive electrode slurry layer is shown as a preferred range, the thickness is preferably 100 to 1,000 μm, more preferably 150 to 800 μm, still more preferably 200 to 700 μm, even more preferably 250 to 700 μm, and particularly preferably 300 to 650 μm.

<Step (b1)>

The step (b1) is a step of obtaining a negative electrode layer member consisting of a laminate of a negative electrode collector and a negative electrode slurry layer. **In** a stage in which a coating film is formed by applying a slurry for a negative electrode, obtained by dispersing a negative electrode active material in a non-aqueous electrolytic solution, onto the negative electrode collector, the above-described high-dielectric constant and low-viscosity solvent is not contained in

the coating film (slurry layer for a negative electrode). That is, the solvent in the slurry layer for a negative electrode is a solvent having a relative permittivity of less than 5.0 and/or a viscosity of 2.0 mPa·s or more. The solvent having a relative permittivity of less than 5.0 and/or a viscosity of 2.0 mPa·s or more is as described in the step (a1).

In the present invention, the "the high dielectric constant low viscosity solvent is not contained in the slurry layer for a negative electrode" means that the above-described high-dielectric constant and low-viscosity solvent is not substantially contained in the slurry layer for a negative electrode. That is, a small amount of the above-described high-dielectric constant and low-viscosity solvent (for example, a proportion of the above-described high-dielectric constant and low-viscosity solvent with respect to solvents constituting the slurry layer for a negative electrode is 5% by mass or less, preferably 2% by mass or less, and more preferably 1% by mass or less) may be contained in the slurry layer for a negative electrode, as long as the effect of the present invention is not impaired.

After forming the laminated structure of the negative electrode collector and the slurry layer for a negative electrode, the above-described high-dielectric constant and low-viscosity solvent is added to the slurry layer for a negative electrode to obtain the negative electrode layer member consisting of the laminate of the negative electrode collector and the negative electrode slurry layer. The high-dielectric constant and low-viscosity solvent used for the negative electrode slurry layer may be the same or different from the high-dielectric constant and low-viscosity solvent used for the positive electrode slurry layer, and is preferably the same. In the negative electrode slurry layer formed in the step (b1), a proportion of the above-described high-dielectric constant and low-viscosity solvent with respect to the solvents is preferably 70% by mass or less, more preferably 60% by mass or less, still more preferably 50% by mass or less, even more preferably 40% by mass or less, even still more preferably 35% by mass or less, also preferably 30% by mass or less, also preferably 25% by mass or less, and also preferably 20% by mass or less. In addition, the proportion thereof is preferably 5% by mass or more, more preferably 8% by mass or more, still more preferably 10% by mass or more, even more preferably 12% by mass or more, even still more preferably 14% by mass or more, also preferably 16% by mass or more, and also preferably 18% by mass or more. In the negative electrode slurry layer formed in the step (b1), in a case where the above-described proportion of the above-described high-dielectric constant and low-viscosity solvent with respect the solvents is shown as a preferred range, the proportion is preferably 5% to 70% by mass, more preferably 8% to 60% by mass, still more preferably 10% to 50% by mass, even more preferably 12% to 40% by mass, even still more preferably 14% to 35% by mass, also preferably 16% to 30% by mass, also preferably 18% to 30% by mass, also preferably 18% to 25% by mass, and also preferably 18% to 20% by mass. In addition, the proportion thereof is also preferably 5% to 60% by mass, also preferably 5% to 50% by mass, also preferably 5% to 40% by mass, also preferably 5% to 35% by mass, also preferably 5% to 30% by mass, also preferably 5% to 25% by mass, and also preferably 5% to 20% by mass.

The proportion ($P^A$% by mass) of the above-described high-dielectric constant and low-viscosity solvent with respect to the solvents of the positive electrode slurry layer in the step (a1) and the proportion ($Q^A$% by mass) of the above-described high-dielectric constant and low-viscosity solvent with respect to the solvents of the negative electrode slurry layer in the step (b1) may be the same or different from each other. The value is preferably $0.5Q^A \leq P^A \leq 2Q^A$, more preferably $0.7Q^A \leq P^A \leq 2Q^A$, still more preferably $0.8Q^A \leq P^A \leq 1.5Q^A$, even more preferably $0.8Q^A \leq P^A \leq 1.3Q^A$, and even still more preferably $0.9Q^A \leq P^A \leq 1.2Q^A$.

The above-described high-dielectric constant and low-viscosity solvent used in the negative electrode slurry layer preferably includes acetonitrile, propionitrile, or isobutyronitrile, and preferably acetonitrile.

In the step (b1), a preferred form of the electrolyte contained in the non-aqueous electrolytic solution constituting the negative electrode slurry layer is the same as the preferred form of the electrolyte contained in the non-aqueous electrolytic solution constituting the positive electrode slurry layer described above. It is preferable that the electrolyte contained in the non-aqueous electrolytic solution constituting the positive electrode slurry layer in the step (a1) and the electrolyte contained in the non-aqueous electrolytic solution constituting the negative electrode slurry layer in the step (b1) are the same compound.

In addition, in the step (b1), a content of the electrolyte in the non-aqueous electrolytic solution constituting the negative electrode slurry layer is preferably 0.5 to 1.5 M (mol/L). In addition, the concentration of the electrolyte in the non-aqueous electrolytic solution is preferably 0.9 M or more, more preferably 0.9 to 1.5 M, still more preferably 1.0 to 1.5 M, and even more preferably 1.1 to 1.4 M.

In the step (b1), an ion conductivity of the non-aqueous electrolytic solution constituting the negative electrode slurry layer is more preferably 8 mS/cm or more, still more preferably 10 mS/cm or more, and even more preferably 12 mS/cm or more. The ion conductivity thereof is preferably 20 mS/cm or less, more preferably 19 mS/cm or less, and also preferably 18 mS/cm or less. In a case where the ion conductivity thereof is shown as a preferred range, the ion conductivity is preferably 8 to 20 mS/cm, more preferably 8 to 19 mS/cm, still more preferably 10 to 18 mS/cm, and even more preferably 12 to 18 mS/cm.

In the step (b1), it is preferable that the non-aqueous electrolytic solution constituting the negative electrode slurry layer contains the above-described additive which reacts with the surface of the negative electrode active material to form a coating film. A content of the above-described additive in the non-aqueous electrolytic solution constituting the negative electrode slurry layer is preferably 1% to 30% by mass, more preferably 2% to 28% by mass, still more preferably

2% to 26% by mass, even more preferably 3% to 24% by mass, and even still more preferably 4% to 22% by mass.

(Negative electrode active material)

As the negative electrode active material, a positive electrode active material capable of reversibly absorbing and deintercalating lithium ions is preferable. The material is not particularly limited as long as the material has the above-described characteristics, and examples thereof include a carbonaceous material, a silicon-based material, a metal oxide, a metal composite oxide, lithium, a lithium alloy, and a negative electrode active material capable of forming an alloy with lithium. Among these, in view of reliability, a carbonaceous material or a silicon-based material is preferably used.

The carbonaceous material used as the negative electrode active material is a material substantially consisting of carbon. Examples thereof include carbon black such as petroleum pitch, graphite (natural graphite and artificial graphite such as vapor-grown graphite), and carbonaceous material obtained by baking various synthetic resins such as a polyacrylonitrile (PAN)-based resin and a furfuryl alcohol resin. Furthermore, examples thereof also include various carbon fibers such as PAN-based carbon fiber, cellulose-based carbon fiber, pitch-based carbon fiber, vapor-grown carbon fiber, dehydrated polyvinyl alcohol (PVA)-based carbon fiber, lignin carbon fiber, vitreous carbon fiber, and activated carbon fiber; mesophase microspheres, graphite whisker, and tabular graphite.

The metal oxide and the metal composite oxide, used as the negative electrode active material, are not particularly limited as long as they are oxides capable of absorbing and deintercalating lithium, and are preferably amorphous oxides. Preferred examples thereof also include chalcogenide which is a reaction product of a metal element and a Group 16 element of the periodic table. The "noncrystalline" herein means an oxide having a broad scattering band with an apex in a range of 20° to 40° in terms of the 2$\theta$ value in case of being measured by an X-ray diffraction method using a CuK$\alpha$ ray, and the oxide may have a crystalline diffraction line.

In the compound group consisting of the noncrystalline oxides and the chalcogenides described above, the noncrystalline oxide of a metalloid element or the above-described chalcogenide is more preferable; and an oxide consisting of one element or a combination of two or more elements selected from elements (Al, Ga, Si, Sn, Ge, Pb, Sb, and Bi) of Group 13 (IIIB) to Group 15 (VB) of the periodic table or the chalcogenide is particularly preferable. Specific examples of the preferred noncrystalline oxide and chalcogenide preferably include $Ga_2O_3$, GeO, PbO, $PbO_2$, $Pb_2O_3$, $Pb_2O_4$, $Pb_3O_4$, $Sb_2O_3$, $Sb_2O_4$, $Sb_2O_8Bi_2O_3$, $Sb_2O_8Si_2O_3$, $Sb_2O_5$, $Bi_2O_3$, $Bi_2O_4$, GeS, PbS, $PbS_2$, $Sb_2S_3$, and $Sb_2S_5$.

From the viewpoint of charge and discharge characteristics at a high current density, it is preferable that the metal (composite) oxide and the chalcogenide contain at least one of titanium or lithium as a constitutional component. Examples of the metal composite oxide (lithium composite metal oxide) including lithium include a composite oxide of lithium oxide and the above metal (composite) oxide or the above chalcogenide, and specifically, $Li_2SnO_2$.

It is also preferable that the negative electrode active material contain a titanium atom. More specifically, $TiNb_2O_7$ (niobium titanium oxide [NTO]) or $Li_4Ti_5O_{12}$ (lithium titanate [LTO]), which goes through a slight volume change in absorbing and deintercalating lithium ions, is preferable because these compounds exhibit excellent high-speed charging and discharging characteristics, suppress the deterioration of an electrode, and can increase the life of a lithium ion secondary battery.

The lithium alloy as the negative electrode active material is not particularly limited as long as it is typically used as a negative electrode active material for a secondary battery, and examples thereof include a lithium aluminum alloy.

The negative electrode active material capable of forming an alloy with lithium is not particularly limited as long as it is typically used as a negative electrode active material for a secondary battery. Such an active material has a large expansion and contraction due to charging and discharging, and the bonding property of the solid particles are reduced as described above; but in the present invention, high bonding property can be achieved by the above-described binder. Examples of such an active material include negative electrode active materials having a silicon atom or a tin atom, and respective metals such as Al, In, and the like; and a negative electrode active material having a silicon atom which achieves a higher battery capacity (silicon atom-containing active materials) is preferable, and a silicon atom-containing active material having a silicon atom content of 40 mol% or more of all constituent atoms is more preferable.

Generally, a negative electrode containing these negative electrode active materials (for example, an Si negative electrode containing a silicon atom-containing active material and an Sn negative electrode containing a tin atom-containing active material) can absorb a larger amount of Li ions than carbon negative electrodes (such as graphite and acetylene black). That is, the amount of Li ions absorbed per unit mass increases. Therefore, the battery capacity (energy density) can be increased. As a result, there is an advantage in that the battery driving duration can be extended.

Examples of the silicon atom-containing active material include a silicon material such as Si and SiOx ($0 < x \leq 1$), an alloy containing titanium, vanadium, chromium, manganese, nickel, copper, or lanthanum (for example, $LaSi_2$ and $VSi_2$), a structured active material (for example, $LaSi_2$/Si), and an active material containing a silicon atom and a tin atom, such as $SnSiO_3$ and $SnSiS_3$. Since SiOx itself can be used as the negative electrode active material (the metalloid oxide) and Si is produced along with the operation of the battery, $SiO_x$ can be used as an active material (or a precursor material thereof) capable of forming an alloy with lithium.

Examples of the negative electrode active materials having a tin atom include Sn, SnO, $SnO_2$, SnS, $SnS_2$, and active materials containing the above-described silicon atom and a tin atom. In addition, examples thereof include a composite oxide with lithium oxide, for example, $Li_2SnO_2$.

A shape of the negative electrode active material is not particularly limited, but is preferably a particle shape. An average particle diameter of the negative electrode active material is preferably 0.1 to 60 μm. In order to have a predetermined particle diameter, a typical pulverizer or classifier is used. For example, a mortar, a ball mill, a sand mill, a vibratory ball mill, a satellite ball mill, a planetary ball mill, a vortex airflow-type jet mill, a sieve, or the like is suitably used. During the pulverization, wet pulverization of causing water or an organic solvent such as methanol to coexist with the negative electrode active material can be performed. In order to provide the desired particle diameter, classification is preferably performed. The classification method is not particularly limited, and a sieve, an air classifier, or the like can be used as desired. Both a dry-type classification and a wet-type classification can be used.

One kind of the above-described negative electrode active material may be used alone, or two or more kinds thereof may be used in combination. Among these, a combination of the silicon atom-containing active material and the carbonaceous material is preferable, and a combination of SiOx ($0 < x \leq 1$) and graphite is particularly preferable. A mass ratio (SiOx/graphite) in a case of combining SiOx ($0 < x \leq 1$) and graphite is preferably 2 or less, more preferably 1 or less, and still more preferably 0.5 or less.

In a case of forming the negative electrode active material layer, a mass (mg) of the negative electrode active material per unit area ($cm^2$) of the negative electrode active material layer (mass per unit area) is not particularly limited. The mass per unit area can be appropriately determined depending on the designed battery capacity.

In the step (b1), a content of the negative electrode active material in the negative electrode slurry is not particularly limited, and is preferably 20% to 70% by volume, more preferably 25% to 65% by volume, still more preferably 30% to 60% by volume, even more preferably 30% to 55% by volume, and particularly preferably 35% to 50% by volume. In addition, the content of the negative electrode active material in the negative electrode slurry is also preferably 40% by volume or more, more preferably 40% to 60% by volume, and also preferably 40% to 55% by volume.

A chemical formula of a compound obtained by the above-described baking method can be calculated using an inductively coupled plasma (ICP) emission spectroscopy as a measuring method from the mass difference of powder before and after baking as a convenient method.

In the step (b1), a method of forming the laminate (negative electrode layer member) of the negative electrode collector and the negative electrode slurry layer is not particularly limited, and it can be appropriately formed according to the method of forming the laminate (positive electrode layer member) of the positive electrode collector and the positive electrode slurry layer described in the step (a1).

In the negative electrode layer member obtained in the step (b1), a thickness of the negative electrode slurry layer is preferably 100 μm or more, more preferably 150 μm or more, also preferably 200 μm or more, also preferably 250 μm or more, and also preferably 300 μm or more. In addition, the thickness of the negative electrode slurry layer is usually 1,000 μm or less, preferably 800 μm or less, more preferably 700 μm or less, and may be 650 μm or less. In a case where the thickness of the negative electrode slurry layer is shown as a preferred range, the thickness is preferably 100 to 1,000 μm, more preferably 150 to 800 μm, still more preferably 200 to 700 μm, even more preferably 250 to 700 μm, and particularly preferably 300 to 650 μm.

It is preferable that the above-described positive electrode slurry layer in the step (a1) and/or the above-described negative electrode slurry layer in the step (b1) contains a conductive auxiliary agent. More preferably, both the above-described positive electrode slurry layer in the step (a1) and the above-described negative electrode slurry layer in the step (b1) contain a conductive auxiliary agent.

(Conductive auxiliary agent)

The conductive auxiliary agent is not particularly limited, a conductive auxiliary agent which is known as a general conductive auxiliary agent can be used. For example, the conductive auxiliary agent may be graphite such as natural graphite and artificial graphite; carbon black such as acetylene black, ketjen black, and furnace black; irregular carbon such as needle cokes; a carbon fiber such as vapor-grown carbon fiber and carbon nanotube; a carbonaceous material such as graphene and fullerene which are electron-conductive materials; metal powder or a metal fiber of copper, nickel, or the like; and a conductive polymer such as polyaniline, polypyrrole, polythiophene, polyacetylene, and a polyphenylene derivative.

In a case where the positive electrode active material and the conductive auxiliary agent are used in combination, among the above-described conductive auxiliary agents, a conductive auxiliary agent which does not intercalate and deintercalate Li and does not function as an active material at the time of charging and discharging a battery is regarded as the conductive auxiliary agent. Therefore, among the conductive auxiliary agents, a conductive auxiliary agent which can function as the active material in the active material layer at the time of charging and discharging of the battery is classified as the active material, not as the conductive auxiliary agent. Whether or not the conductive auxiliary agent functions as the

active material at the time of charging and discharging of the battery is not unambiguously determined, and determined by a combination with the active material.

One kind of conductive auxiliary agent or two or more kinds of conductive auxiliary agents may be used.

A content of the conductive auxiliary agent in the positive electrode slurry layer or in the negative electrode slurry layer is preferably 0.5% to 5% by volume and more preferably 1% to 3% by volume.

A shape of the conductive auxiliary agent is not particularly limited, and is preferably a particulate shape. A median diameter D50 (based on volume) of the conductive auxiliary agent is not particularly limited, and is, for example, preferably 0.01 to 50 μm and preferably 0.02 to 10.0 μm.

<Step (c1)>

In the step (c1), the positive electrode layer member obtained in the step (a1), a separator, and the negative electrode layer member obtained in the step (b1) are laminated such that one side of the separator and the positive electrode slurry layer of the positive electrode layer member are in contact with each other, and the other side of the separator and the negative electrode slurry layer of the negative electrode layer member are in contact with each other, thereby forming a laminated structure. In this manner, a laminate including the positive electrode collector, the positive electrode active material layer, the separator, the negative electrode active material layer, and the negative electrode collector in this order is obtained. The non-aqueous electrolytic solution secondary battery as shown in Fig. 1 can be obtained by installing tabs on the positive electrode collector and the negative electrode collector according to a conventional method and then sealing the laminate.

In the step (c1), by laminating the positive electrode layer member, the separator, and the negative electrode layer member as described above, the solvent of the non-aqueous electrolytic solution in the positive electrode slurry layer and the solvent of the non-aqueous electrolytic solution in the negative electrode slurry layer usually pass through the separator and diffuse and are homogenized, depending on the type of the separator. In addition, in the non-aqueous electrolyte secondary battery in which charging and discharging are repeated, even in a case where a polymer electrolyte in which a solvent is difficult to move is used as the separator, the solvent formulations of the non-aqueous electrolytic solution in the positive electrode slurry layer and the non-aqueous electrolytic solution in the negative electrode slurry layer are usually in a state of being approximately uniform. That is, in the first embodiment, a technical element characterized by forming the slurry layer for a negative electrode (layer in which the solvent of the non-aqueous electrolytic solution has a relative permittivity of less than 5.0 and/or a viscosity of 2.0 mPa·s or more), which is a layer in a stage before the negative electrode slurry layer, and then containing (adding later) the high-dielectric constant and low-viscosity solvent in the negative electrode slurry layer is a technical element for exhibiting a desired effect in the secondary battery to be obtained.

Subsequently, another preferred embodiment (also referred to as "second embodiment") of the manufacturing method according to the embodiment of the present invention will be described. The second embodiment includes the following steps (a2) to (c2). In the second embodiment, the order in which the steps (a2) and (b2) are performed is not limited; and the positive electrode layer member may be obtained by performing the step (a2) and then the negative electrode layer member may be obtained by performing the step (b2), or the negative electrode layer member may be obtained by performing the step (b2) and then the positive electrode layer member may be obtained by performing the step (a2), or the steps (a2) and (b2) may be performed simultaneously and in parallel.

(a2) obtaining a positive electrode layer member consisting of a laminate of a positive electrode collector and a positive electrode slurry layer obtained by dispersing a positive electrode active material in a non-aqueous electrolytic solution in which a proportion of a solvent having a relative permittivity of 5.0 or more and a viscosity of less than 2.0 mPa·s with respect to solvents is X% by mass

(b2) obtaining a negative electrode layer member consisting of a laminate of a negative electrode collector and a negative electrode slurry layer obtained by dispersing a negative electrode active material in a non-aqueous electrolytic solution in which a proportion of a solvent having a relative permittivity of 5.0 or more and a viscosity of less than 2.0 mPa·s with respect to solvents is lower than X% by mass

(c2) laminating the positive electrode layer member, a separator, and the negative electrode layer member to form a laminated structure in which one side of the separator and the positive electrode slurry layer are in contact with each other and the other side of the separator and the negative electrode slurry layer are in contact with each other

<Step (a2)>

The step (a2) is a step of obtaining a positive electrode layer member consisting of a laminate of a positive electrode collector and a positive electrode slurry layer. At least a part of the solvent of the non-aqueous electrolytic solution constituting the positive electrode slurry layer is the above-described high-dielectric constant and low-viscosity solvent, and a proportion (X% by mass) of the above-described high-dielectric constant and low-viscosity solvent with

respect to solvents of the non-aqueous electrolytic solution constituting the positive electrode slurry layer is higher than a proportion of the above-described high-dielectric constant and low-viscosity solvent with respect to solvents of the non-aqueous electrolytic solution constituting the negative electrode slurry layer in the step (b2).

In the positive electrode slurry layer formed in the step (a2), a proportion of the above-described high-dielectric constant and low-viscosity solvent with respect to the solvents is preferably 70% by mass or less, more preferably 60% by mass or less, still more preferably 50% by mass or less, even more preferably 40% by mass or less, even still more preferably 35% by mass or less, also preferably 30% by mass or less, also preferably 25% by mass or less, and also preferably 20% by mass or less. In addition, the proportion thereof is preferably 5% by mass or more, more preferably 8% by mass or more, still more preferably 10% by mass or more, even more preferably 12% by mass or more, even still more preferably 14% by mass or more, also preferably 16% by mass or more, and also preferably 18% by mass or more. In the positive electrode slurry layer formed in the step (a2), in a case where the above-described proportion of the above-described high-dielectric constant and low-viscosity solvent with respect the solvents is shown as a preferred range, the proportion is preferably 5% to 70% by mass, more preferably 8% to 60% by mass, still more preferably 10% to 50% by mass, even more preferably 12% to 40% by mass, even still more preferably 14% to 35% by mass, also preferably 16% to 30% by mass, also preferably 18% to 25% by mass, and also preferably 18% to 20% by mass. In addition, the proportion thereof is also preferably 5% to 60% by mass, also preferably 5% to 50% by mass, also preferably 5% to 40% by mass, also preferably 5% to 35% by mass, also preferably 5% to 30% by mass, also preferably 5% to 25% by mass, and also preferably 5% to 20% by mass. As the solvent other than the above-described high-dielectric constant and low-viscosity solvent constituting the positive electrode slurry layer, the solvent described in the step (a1) of the first embodiment can be applied.

In the positive electrode slurry layer formed in the step (a2), in a case where a slurry for a positive electrode, containing a constituent component of the positive electrode slurry layer (the solvent, the positive electrode active material, the electrolyte, the additive as necessary, a conductive auxiliary agent, and the like), is applied onto the positive electrode collector, the above-described proportion of the high-dielectric constant and low-viscosity solvent may be adjusted such that the slurry for a positive electrode contains the above-described desired amount of the high-dielectric constant and low-viscosity solvent. In addition, the solvent of the slurry for a positive electrode may be in a form in which the above-described high-dielectric constant and low-viscosity solvent is at a concentration lower than the above-described desired amount or the high-dielectric constant and low-viscosity solvent is not contained. In this case, after the formation of the coating film with the slurry for a positive electrode, the high-dielectric constant and low-viscosity solvent is added to the coating film, and the concentration of the high-dielectric constant and low-viscosity solvent in the coating film can be increased to the desired level, whereby the positive electrode slurry layer can be obtained.

As the solvent constituting the positive electrode slurry layer, one kind or two or more kinds of the above-described high-dielectric constant and low-viscosity solvent can be used.

The above-described high-dielectric constant and low-viscosity solvent preferably includes acetonitrile, propionitrile, or isobutyronitrile, and more preferably acetonitrile.

In the positive electrode slurry layer of the step (a2), the description of the kind, the content, and the like of the positive electrode active material, the electrolyte, the additive, and the conductive auxiliary agent, and the description of the ion conductivity and the like of the non-aqueous electrolytic solution are the same as the description of the kind, the content, and the like of the positive electrode active material, the electrolyte, the additive, and the conductive auxiliary agent in the first embodiment. In addition, a preferred thickness of the positive electrode slurry layer in the step (a2) is also the same as the preferred thickness of the positive electrode slurry layer described in the first embodiment.

<Step (b2)>

The step (b2) is a step of obtaining a negative electrode layer member consisting of a laminate of a negative electrode collector and a negative electrode slurry layer. In the formation of the negative electrode slurry layer, a proportion of the above-described high-dielectric constant and low-viscosity solvent with respect to solvents is set to be lower than that in the positive electrode slurry layer.

In the negative electrode slurry layer formed in the step (b2), the proportion of the above-described high-dielectric constant and low-viscosity solvent with respect to the solvents is preferably less than 20% by mass, more preferably 15% by mass or less, still more preferably 12% by mass or less, even more preferably 10% by mass or less, even still more preferably 8% by mass or less, also preferably 7% by mass or less, and also preferably 5% by mass or less. In addition, it is also preferable that the proportion is 0% by mass (the above-described high-dielectric constant and low-viscosity solvent is not contained). As the solvent other than the above-described high-dielectric constant and low-viscosity solvent constituting the negative electrode slurry layer, the solvent described in the step (a1) of the first embodiment can be applied.

In a case where the solvent of the negative electrode slurry layer in the step (b2) includes the high-dielectric constant and low-viscosity solvent, a relationship between a proportion ($P^B$% by mass) of the above-described high-dielectric constant and low-viscosity solvent with respect to the solvents of the positive electrode slurry layer in the step (a2) and a proportion ($Q^B$% by mass) of the above-described high-dielectric constant and low-viscosity solvent with respect to the solvents of the negative electrode slurry layer in the step (b2) is preferably $1.2Q^B \leq P^B$, more preferably $1.5Q^B \leq P^B$, still more preferably $2Q^B \leq P^B$, even still preferably $2.5Q^B \leq P^B$, even still more preferably $3Q^B \leq P^B$, and further more preferably $3.5Q^B \leq P^B$.

In the negative electrode slurry layer of the step (b2), the description of the kind, the content, and the like of the negative electrode active material, the electrolyte, the additive, and the conductive auxiliary agent is the same as that in the first embodiment, except that the proportion of the above-described high-dielectric constant and low-viscosity solvent with respect to the solvents is set to be a lower concentration than that in the positive electrode slurry layer. In addition, a preferred thickness of the negative electrode slurry layer in the step (b2) is also the same as the preferred thickness of the negative electrode slurry layer described in the first embodiment.

In the step (b2), an ion conductivity of the non-aqueous electrolytic solution constituting the negative electrode slurry layer is preferably 12 mS/cm or less, more preferably 11 mS/cm or less, still more preferably 10 mS/cm or less, and even more preferably 9.5 mS/cm or less. The ion conductivity thereof is preferably 5 mS/cm or more, more preferably 6 mS/cm or more, and still more preferably 7 mS/cm or more. In a case where the ion conductivity thereof is shown as a preferred range, the ion conductivity is preferably 5 to 12 mS/cm, more preferably 6 to 11 mS/cm, still more preferably 7 to 10 mS/cm, and even more preferably 7 to 9.5 mS/cm. In a case where the negative electrode slurry layer is allowed to subsequently contain the high-dielectric constant and low-viscosity solvent or the high-dielectric constant and low-viscosity solvent is subsequently concentrated after the step (c2) described later, the preferred ion conductivity of the non-aqueous electrolytic solution constituting the negative electrode slurry layer is the same as the preferred ion conductivity of the negative electrode slurry layer described in the first embodiment.

<Step (c2)>

In the step (c2), the positive electrode layer member obtained in the step (a2), a separator, and the negative electrode layer member obtained in the step (b2) are laminated such that one side of the separator and the positive electrode slurry layer of the positive electrode layer member are in contact with each other, and the other side of the separator and the negative electrode slurry layer of the negative electrode layer member are in contact with each other, thereby forming a laminated structure. In this manner, a laminate including the positive electrode collector, the positive electrode active material layer, the separator, the negative electrode active material layer, and the negative electrode collector in this order is obtained. The non-aqueous electrolytic solution secondary battery as shown in Fig. 1 can be obtained by installing tabs on the positive electrode collector and the negative electrode collector according to a conventional method and then sealing the laminate.

In the step (c2), by laminating the positive electrode layer member, the separator, and the negative electrode layer member as described above, the solvent of the non-aqueous electrolytic solution in the positive electrode slurry layer and the solvent of the non-aqueous electrolytic solution in the negative electrode slurry layer usually pass through the separator and diffuse and are homogenized. That is, in the second embodiment, in order to exhibit a desired effect in the secondary battery to be obtained, it is a characteristic technical element to form a negative electrode slurry layer which does not contain the high-dielectric constant and low-viscosity solvent or contains the high-dielectric constant and low-viscosity solvent at a low concentration, and then, through the step (c2), to allow the negative electrode slurry layer to contain the high-dielectric constant and low-viscosity solvent or to increase the concentration of the high-dielectric constant and low-viscosity solvent.

In both the first embodiment and the second embodiment described above, it is preferable that the kind of the high-dielectric constant and low-viscosity solvent to be used is the same.

In addition, in the non-aqueous electrolyte secondary battery to be obtained in any of the first embodiment and the second embodiment described above, it is preferable that both the positive electrode slurry layer and the negative electrode slurry layer contain acetonitrile. In a case where the positive electrode slurry layer contains acetonitrile, even though the negative electrode slurry layer does not contain acetonitrile immediately after the battery is produced, the solvent diffuses due to the passage of time or the repetition of charging and discharging, and the acetonitrile is also contained in the negative electrode. It is noted that the diffusion is not limited to the acetonitrile, and applies to all high-dielectric constant and low-viscosity solvents.

It is preferable that a constant voltage (CV) charging is performed at a potential higher than a reduction potential of the above-described high-dielectric constant and low-viscosity solvent contained in the electrode slurry layer after the step (c1) in the first embodiment and after the step (c2) in the second embodiment. By performing the CV charging at such a potential, it is possible to prevent the high-dielectric constant and low-viscosity solvent from being reduced to form a coating film on the surface of the negative electrode active material, which deteriorates the battery performance, or to prevent the destruction of the active material; and it is possible to obtain a non-aqueous electrolytic solution secondary battery having higher performance.

The reduction potential can be determined by the following measuring method.

In the manufacturing method according to the embodiment of the present invention, in a case where an additive (coating film forming agent) is blended in the electrode slurry layer, it is preferable that the additive remains in the electrode slurry (at least in the negative electrode slurry) even after the non-aqueous electrolytic solution secondary battery is repeatedly charged and discharged (for example, even after 100 cycles of charging and discharging). Usually, the additive is consumed by forming a coating film on the surface of the negative electrode active material by charging and discharging. However, in a case where the manufacturing method according to the embodiment of the present invention is adopted, the above-described additive tends to remain in a certain amount in the electrolytic solution even after charging and discharging are repeated. Vinylene carbonate is suitable as such an additive. A concentration of the additive in the negative electrode slurry layer after repeating charging and discharging (for example, after 100 cycles of charging and discharging) is preferably 0.2% by mass or more, more preferably 0.5% by mass or more, and still more preferably 0.8% by mass or more. The concentration of the additive depends on the amount of the additive added to the slurry, but is usually 30% by mass or less, preferably 25% by mass or less, more preferably 20% by mass or less, and particularly preferably 15% by mass or less.

In the manufacturing method according to the embodiment of the present invention, in a case where the electrode slurry layer contains ethylene carbonate as the solvent, in a non-aqueous electrolytic solution secondary battery obtained by repeating charging and discharging (for example, performing charging and discharging for 100 cycles), in a case where the concentration of the ethylene carbonate in the solvent of the electrode slurry (at least the solvent of the negative electrode slurry) is converted in terms of 100% by mass as the concentration before charging and discharging, it is preferable that the concentration of ethylene carbonate is reduced to 95% by mass or less. That is, in a case where the manufacturing method according to the embodiment of the present invention is adopted, the ethylene carbonate tends to be efficiently consumed for the formation of the coating film of the negative electrode active material.

(Other components)

In the manufacturing method according to the embodiment of the present invention, the above-described electrode slurry layer can contain, as desired, an ionic liquid, a thickener, an antifoaming agent, a leveling agent, a dehydrating agent, an antioxidant, and the like.

In relation to the above-described manufacturing method according to the embodiment of the present invention, the present invention provides a slurry for a non-aqueous electrolytic solution secondary battery (hereinafter, also referred to as a slurry according to the embodiment of the present invention).

[Slurry for non-aqueous electrolytic solution secondary battery]

A slurry for a non-aqueous electrolytic solution secondary battery, containing a non-aqueous electrolytic solution containing a solvent having a relative permittivity of 5.0 or more and a viscosity of less than 2.0 mPa·s, and an electrode active material.

The slurry according to the embodiment of the present invention is a slurry suitable for forming an electrode slurry layer of a non-aqueous electrolytic solution secondary battery.

That is, the slurry according to the embodiment of the present invention is a slurry suitable for forming the positive electrode slurry layer of the positive electrode layer member in the first embodiment of the manufacturing method according to the embodiment of the present invention, forming the positive electrode slurry layer of the positive electrode layer member in the second embodiment of the manufacturing method according to the embodiment of the present invention, or forming the negative electrode slurry layer of the negative electrode layer member in the second embodiment of the manufacturing method according to the embodiment of the present invention. Therefore, a formulation of the slurry according to the embodiment of the present invention, a content of each component, and the like are the same as the description of the formulation of the positive electrode slurry layer of the positive electrode layer member in the first embodiment of the manufacturing method according to the embodiment of the present invention, the positive electrode slurry layer of the positive electrode layer member in the second embodiment of the manufacturing method according to the embodiment of the present invention, or the slurry layer for a negative electrode of the negative electrode layer member in the second embodiment of the manufacturing method according to the embodiment of the present invention, and the content of each component. A more preferred form of the slurry according to the embodiment of the present invention will be described below.

In the slurry according to the embodiment of the present invention, in a case where the electrode active material is a positive electrode active material, a proportion of the above-described high-dielectric constant and low-viscosity solvent with respect to the solvents is preferably 70% by mass or less, more preferably 60% by mass or less, still more preferably 50% by mass or less, even more preferably 40% by mass or less, even still more preferably 35% by mass or less, also preferably 30% by mass or less, also preferably 25% by mass or less, and also preferably 20% by mass or less. In addition,

the proportion thereof is preferably 5% by mass or more, more preferably 8% by mass or more, still more preferably 10% by mass or more, even more preferably 12% by mass or more, even still more preferably 14% by mass or more, also preferably 16% by mass or more, and also preferably 18% by mass or more. The proportion thereof is preferably 5% to 70% by mass, more preferably 8% to 60% by mass, still more preferably 10% to 50% by mass, even more preferably 12% to 40% by mass, even still more preferably 14% to 35% by mass, also preferably 16% to 30% by mass, also preferably 18% to 25% by mass, and also preferably 18% to 20% by mass. In addition, the proportion thereof is also preferably 5% to 60% by mass, also preferably 5% to 50% by mass, also preferably 5% to 40% by mass, also preferably 5% to 35% by mass, also preferably 5% to 30% by mass, also preferably 5% to 25% by mass, and also preferably 5% to 20% by mass.

In addition, in the slurry according to the embodiment of the present invention, in a case where the electrode active material is a negative electrode active material, a proportion of the above-described high-dielectric constant and low-viscosity solvent with respect to the solvents is preferably less than 20% by mass, more preferably 15% by mass or less, still more preferably 12% by mass or less, even more preferably 10% by mass or less, even still more preferably 8% by mass or less, also preferably 7% by mass or less, also preferably 5% by mass or less, also preferably 3% by mass or less, also preferably 2% by mass or less, and also preferably 1% by mass or less. In a case where the electrode active material in the slurry according to the embodiment of the present invention is a negative electrode active material, the proportion of the above-described high-dielectric constant and low-viscosity solvent with respect to the solvents is usually 0.1% by mass or more, and may be 0.5% by mass or more. Therefore, in the slurry according to the embodiment of the present invention, in a case where the electrode active material is a negative electrode active material, the proportion of the above-described high-dielectric constant and low-viscosity solvent with respect to the solvents is preferably 0.1% by mass or more and less than 20% by mass, more preferably 0.1% to 15% by mass, still more preferably 0.1% to 12% by mass, even more preferably 0.1% to 10% by mass, also preferably 0.1% to 5% by mass, also preferably 0.1% to 3% by mass, also preferably 0.1% to 2% by mass, and also preferably 0.5% to 2% by mass.

In the slurry according to the embodiment of the present invention, a content of the above-described electrode active material in the slurry is preferably 20% to 70% by volume, more preferably 25% to 65% by volume, still more preferably 30% to 60% by volume, even more preferably 30% to 55% by volume, and particularly preferably 35% to 50% by volume. In addition, the content of the negative electrode active material in the negative electrode slurry is also preferably 40% by volume or more, more preferably 40% to 60% by volume, and also preferably 40% to 55% by volume.

The slurry according to the embodiment of the present invention preferably contains the above-described conductive auxiliary agent. In the slurry according to the embodiment of the present invention, a content of the conductive auxiliary agent is preferably 0.5% to 5% by volume and more preferably 1% to 3% by volume.

The slurry according to the embodiment of the present invention preferably contains acetonitrile, propionitrile, or isobutyronitrile as the above-described high-dielectric constant and low-viscosity solvent, and it is also preferable that the above-described high-dielectric constant and low-viscosity solvent is acetonitrile.

In addition, in relation to the above-described manufacturing method according to the embodiment of the present invention or the slurry according to the embodiment of the present invention, the present invention provides the following non-aqueous electrolytic solution secondary battery.

[Non-aqueous electrolytic solution secondary battery]

A non-aqueous electrolytic solution secondary battery including, in the following order, a positive electrode slurry layer, a separator, and a negative electrode slurry layer, in which the positive electrode slurry layer consists of a slurry obtained by dispersing a positive electrode active material in a non-aqueous electrolytic solution containing a solvent having a relative permittivity of 5.0 or more and a viscosity of less than 2.0 mPa·s, and the negative electrode slurry layer consists of a slurry obtained by dispersing a negative electrode active material in a non-aqueous electrolytic solution containing a solvent having a relative permittivity of 5.0 or more and a viscosity of less than 2.0 mPa·s.

In the above-described non-aqueous electrolytic solution secondary battery, it is preferable that the above-described positive electrode slurry layer is interposed between the positive electrode collector and the above-described separator. In addition, it is preferable that the above-described negative electrode slurry layer is interposed between the negative electrode collector and the above-described separator. That is, it is preferable that the positive electrode layer is composed of the laminate of the positive electrode collector and the positive electrode slurry layer, and the negative electrode layer is composed of the laminate of the negative electrode collector and the negative electrode slurry layer.

The aspects described in the manufacturing method according to the embodiment of the present invention are applied as it is to the description of each component of the above-described non-aqueous electrolytic solution secondary battery.

In the above-described non-aqueous electrolytic solution secondary battery, it is preferable that both the above-described high-dielectric constant and low-viscosity solvent contained in the above-described positive electrode slurry layer and the above-described high-dielectric constant and low-viscosity solvent contained in the above-described negative electrode slurry layer contain acetonitrile, propionitrile, or isobutyronitrile, and it is more preferable to be

acetonitrile.

In the above-described non-aqueous electrolytic solution secondary battery, it is preferable that, in a case where a proportion of the high-dielectric constant and low-viscosity solvent with respect to the solvents of the positive electrode slurry layer is denoted by $X^a$% by mass and a proportion of the high-dielectric constant and low-viscosity solvent with respect to the solvents of the negative electrode slurry layer is denoted by $X^b$% by mass, $X^a > X^b$ is satisfied.

<Use of non-aqueous electrolytic solution secondary battery>

The above-described non-aqueous electrolytic solution secondary battery can be applied to various uses. In a case of being mounted in an electronic apparatus, examples thereof include a notebook computer, a pen-based input personal computer, a mobile personal computer, an e-book player, a mobile phone, a cordless phone handset, a pager, a handy terminal, a portable fax, a mobile copier, a portable printer, a headphone stereo, a video movie, a liquid crystal television, a handy cleaner, a portable CD, a mini disc, an electric shaver, a transceiver, an electronic notebook, a calculator, a memory card, a portable tape recorder, a radio, a backup power supply, and a memory card. In addition, in a case of being used for consumer applications, examples thereof include an automobile, an electric vehicle, a motor, a lighting instrument, a toy, a game device, a road conditioner, a watch, a strobe, a camera, and a medical device (a pacemaker, a hearing aid, a shoulder massage device, and the like). Furthermore, the non-aqueous electrolytic solution secondary can be used for various military usages and universe usages. In addition, the secondary battery according to the embodiment of the present invention can also be combined with a solar battery.

Among these, it is preferable to apply the non-aqueous electrolytic solution secondary to an application in which high capacity and high rate discharge characteristics are required. For example, in a power storage facility or the like in which an increase in capacity is expected in the future, high safety is essential and it is required to achieve battery performance. In addition, it is assumed that electric vehicles and the like are equipped with high-capacity secondary batteries and are used for daily charging at home. According to the present invention, it is possible to suitably respond to such a usage form and exhibit the excellent effect.

Examples

Hereinafter, the present invention will be more specifically described based on Examples, but the present invention is not limited to the embodiments.

Abbreviations used in Examples are as follows.

EC: ethylene carbonate
DMC: dimethyl carbonate
VC: vinylene carbonate
KB: ketjen black
PE: polyethylene

A relative permittivity, viscosity, and reduction potential of solvents used in Examples were measured by the following methods. The results are shown in the table below.

[Method of measuring relative permittivity]

SH2-Z manufactured by TOYO Corporation as a sample holder, and a cell for liquid evaluation were used.

The cell for liquid evaluation was filled with a solvent, set in SH2-Z, and then connected to an impedance measuring analyzer "MTZ-35" manufactured by Bio-Logic, and measurement was performed under a condition of a frequency of 1 Hz to 10 MHz.

The obtained capacitance C1, cell thickness d, cell area S, and vacuum dielectric constant $\varepsilon 0 = 8.9 \times 10^{-12}$ were used, and a relative permittivity $\varepsilon$ was calculated from the following expression.

$$\varepsilon = C1 \times d/(\varepsilon 0 \times S)$$

[Method of measuring viscosity]

TVE-25L manufactured by TOKI-SANGYO CO., LTD., and a corn rotor 48' × R24 were used.

2 mL of a solvent was weighed into a measurement container of TVE-25L in an environment of 25°C, and a numerical value after 1 min at a rotation speed of 100 rpm was defined as a viscosity (unit: mPa·s (millipascalsecond)).

[Method of measuring reduction potential]

As an electrolytic solution for measuring a reduction potential, ethylene carbonate/ethyl methyl carbonate (50% by volume/50% by volume) containing $LiPF_6$ at a concentration of 1 M was prepared.
A high-dielectric constant and low-viscosity solvent was added to the electrolytic solution such that the content was 5% by mass, and cyclic voltammetry was carried out.
In rising of a current value, a voltage at which a difference between a result measured only with the electrolytic solution for measuring a reduction potential and a result measured by adding the high-dielectric constant and low-viscosity solvent was 0.2 mA was defined as a reduction potential.
The voltage is described as being changed from an $Ag/AgNO_3$ reference value to an Li/Li+ reference value.

Measurement device: VMP-300 manufactured by Bio-Logic
Action pole: glassy carbon having diameter of 3 mm
Counter electrode: platinum black mesh
Reference electrode: $Ag/AgNO_3$ (internal solution: acetonitrile/TBAP) manufactured by BAS Inc.; RE-7
Measurement condition:

Scanning voltage: -3.6 V to -1 V (vs Ag/Ag+)
Scanning speed: 5 mV/sec

[Table 1]

| | Carbonate solvent | | High-dielectric constant and low-viscosity solvent | | | | |
|---|---|---|---|---|---|---|---|
| | EC | DMC | Acetonitrile | Propionitrile | Isobutyronitrile | Dimethoxy ethane | Methyl acetate |
| Relative permittivity | 40* | 3.1 | 37.5 | 28.9 | 24.5 | 7.2 | 6.7 |
| Viscosity (mPa·s) | Solid | 0.6 | 0.4 | 0.5 | 0.6 | 0.5 | 0.4 |
| Reduction potential (V) | - | - | 1.3 | 1.2 | 1.2 | 1.3 | 1.1 |
| * Measured at 60°C because it was solid at 25°C | | | | | | | |

[Preparation of non-aqueous electrolytic solution]

A non-aqueous electrolytic solution (concentration of water: 100 ppm or less) was prepared according to the formulation shown in the table below, and an ion conductivity thereof was measured as follows. As an electrolyte, $LiPF_6$ was used in E0 to E14, and $LiN(FSO_2)_2$ (also referred to as "LiFSI") was used in E15 at concentrations shown in the table below. In addition, as an additive, VC was used at a concentration shown in the table below.

<Measurement of ion conductivity>

The non-aqueous electrolytic solution was put into a four-terminal conductivity cell SB1400 manufactured by EC FRONTIER CO., LTD., and then sealed. The cell was measured under the following conditions using VMP-300 manufactured by Bio-Logic, and the ion conductivity was calculated.

Measurement temperature: 25°C
Measurement method: 4-terminal measurement AC impedance method
Frequency: 1 MHz to 1 Hz
Amplitude voltage: 10 mV

The ion conductivity ($\sigma$) was calculated from the obtained resistance value R based on the electrode area S of the cell and the distance L between electrodes, according to the following calculation expression.

$$\sigma = 1/R \times L/S$$

[Table 2]

| Non-aqueous electrolytic solution No. | Carbonate solvent | | High-dielectric constant and low-viscosity solvent | | Concentration of electrolyte (mol/L) | Concentration of additive (% by mass) | Ion conductivity (mS/cm) |
|---|---|---|---|---|---|---|---|
| | EC (part by mass) | DMC (part by mass) | Type | Blending amount (part by mass) | | | |
| E0 | 20 | 80 | - | 0 | 1.2 | 5 | 8 |
| E1 | 20 | 60 | Acetonitrile | 20 | 1.2 | 5 | 15 |
| E2 | 20 | 50 | Methyl acetate | 30 | 1.2 | 5 | 12 |
| E3 | 20 | 60 | Dimethoxy ethane | 20 | 1.2 | 5 | 13 |
| E4 | 20 | 75 | Acetonitrile | 5 | 1.2 | 5 | 11 |
| E5 | 20 | 60 | Acetonitrile | 20 | 0.8 | 5 | 12 |
| E6 | 20 | 60 | Acetonitrile | 20 | 1.2 | 0 | 15 |
| E7 | 20 | 60 | Acetonitrile | 20 | 1.2 | 20 | 13 |
| E8 | 20 | 60 | Acetonitrile | 20 | 1.2 | 30 | 11 |
| E9 | 50 | 30 | Acetonitrile | 20 | 1.2 | 5 | 8 |
| E10 | 20 | 75 | Methyl acetate | 5 | 1.2 | 5 | 9 |
| E11 | 20 | 60 | Propionitrile | 20 | 1.2 | 5 | 13 |
| E12 | 20 | 75 | Propionitrile | 5 | 1.2 | 5 | 9 |
| E13 | 20 | 60 | Isobutyronitrile | 20 | 1.2 | 5 | 12 |
| E14 | 20 | 75 | Isobutyronitrile | 5 | 1.2 | 5 | 9 |
| E15 | 20 | 60 | Acetonitrile | 20 | 1.2 | 5 | 17 |

[Example B1]

<Preparation of slurry for positive electrode>

45% by volume of $LiFePO_4$ (LFP) as a positive electrode active material, 2% by volume of KB as a conductive auxiliary agent, and 53% by volume of a non-aqueous electrolytic solution shown in the table below were mixed with each other, and the mixture was stirred at 1,250 rpm for 90 seconds using a centrifugal planetary mixer (manufactured by THINKY Corporation; AWATORI RENTARO) to obtain a slurry for a positive electrode.

<Preparation of slurry for negative electrode>

40% by volume of artificial graphite as a negative electrode active material, 1.5% by volume of carbon black as a conductive auxiliary agent, and 58.5% by volume of a non-aqueous electrolytic solution shown in the table below were mixed with each other, and the mixture was stirred at 650 rpm for 5 minutes using a centrifugal planetary mixer (manufactured by THINKY Corporation; AWATORI RENTARO) to obtain a slurry for a negative electrode.

<Production of non-aqueous electrolytic solution secondary battery>

The slurry for a positive electrode prepared as described above was applied onto an aluminum foil as a positive electrode collector such that the thickness was 500 $\mu$m and the area was 80 $cm^2$ (length of 80 mm and width of 100 mm), thereby obtaining a positive electrode layer member consisting of a laminate of the positive electrode collector and the

positive electrode slurry layer.

The slurry for a negative electrode prepared as described above was applied onto a copper foil as a negative electrode collector such that the thickness was 500 μm and the area was 87 $cm^2$ (length of 84 mm and width of 104 mm), thereby obtaining a negative electrode layer member consisting of a laminate of the negative electrode collector and the negative electrode slurry layer.

A separator shown in the table below was cut out to an area of 91 $cm^2$ (length of 86 mm and width of 106 mm).

The above-described positive electrode layer member, the above-described separator, and the above-described negative electrode layer member were laminated to obtain a laminate in which one side of the separator and the positive electrode slurry layer were in contact with each other and the other side of the separator and the negative electrode slurry layer were in contact with each other. In order to prevent volatilization of the electrolytic solution, the above-described series of steps were completed within 1 minute.

A non-aqueous electrolytic solution secondary battery was obtained by ultrasonically welding a tab to each end part of the positive electrode collector and the negative electrode collector, wrapping the tab with an aluminum laminate, and sealing the laminate with a vacuum sealer.

[Examples B2 to B15, Examples B18 to B24, and Comparative Examples HB1 and HB2]

A non-aqueous electrolytic solution secondary battery was obtained in the same manner as in Example B 1, except that a non-aqueous electrolytic solution used for the slurry for a positive electrode and the slurry for a negative electrode was as shown in the columns of "Positive electrode slurry layer" and "Negative electrode slurry layer" in the table below, thicknesses of the positive electrode slurry layer and the negative electrode slurry layer were as shown in the table below, and a separator shown in the table below was used.

[Examples B16 and B17]

In the production of the non-aqueous electrolytic solution secondary battery of Comparative Example HB2, after preparing the positive electrode layer member consisting of the laminate of the positive electrode collector and the positive electrode slurry layer, acetonitrile was added to the positive electrode slurry layer such that an acetonitrile concentration in the solvents of the positive electrode slurry layer was 20% by mass (described as "Added later" in the table below), thereby obtaining a positive electrode layer member of a non-aqueous electrolyte secondary battery of each of Examples B16 and B17.

In addition, in the production of the non-aqueous electrolytic solution secondary battery of Comparative Example HB2, after preparing the negative electrode layer member consisting of the laminate of the negative electrode collector and the negative electrode slurry layer, acetonitrile was added to the negative electrode slurry layer such that an acetonitrile concentration in the solvents of the negative electrode slurry layer was 20% by mass (described as "Added later" in the table below), thereby obtaining a negative electrode layer member of a non-aqueous electrolyte secondary battery of each of Examples B16 and B17.

A non-aqueous electrolytic solution secondary battery was obtained in the same manner as in Example B1 using a separator as shown in the table below.

[Test Example 1]

A charging and discharging test was carried out using TOSCAT 3000 manufactured by TOYO SYSTEM Co., LTD.

<Charging and discharging before test>

The non-aqueous electrolytic solution secondary battery produced as described above was subjected to CC-CV charging under the following conditions, and then subjected to CC discharging under the following conditions to perform charging and discharging before test, thereby obtaining a non-aqueous electrolytic solution secondary battery for test.

CC-CV charging conditions: current value of 100 mA, upper limit voltage of 3.9 V, termination current value of 25 mA
CC discharge conditions: current value of 100 mA, end voltage value of 2.0 V

In the non-aqueous electrolytic solution secondary battery of Example B18, CC-CV charging was performed under the following conditions before the above-described CC-CV charging.
CC-CV charging conditions: current value of 100 mA, upper limit voltage of 2.4 V, charging time of 4 hours

In the present example, the upper limit voltage of 2.4 V corresponded to approximately 1.5 V as a negative

electrode voltage.

After the above-described charging and discharging before test, a part of the aluminum laminate was cut to remove unnecessary gas generated by the charging and discharging before test, and the laminate was sealed again with a vacuum sealer.

<Cycle characteristic test>

The above-described non-aqueous electrolytic solution secondary battery for test was repeatedly subjected to CC-CV charging and CC discharging under the following conditions, and cycle characteristics were examined.

CC-CV charging conditions: current value of 250 mA, upper limit voltage of 3.9 V, termination current value of 25 mA
CC discharging: current value of 250 mA, termination voltage value of 2.0 V

The number of cycles at which the discharge capacity reached 50% with respect to the discharge capacity at the time of one cycle was applied to the following evaluation standard to evaluate the cycle characteristics.

(Evaluation standard)

A: 301 cycles or more
B: 201 cycles or more and 300 cycles or less
C: 101 cycles or more and 200 cycles or less
D: 51 cycles or more and 100 cycles or less
E: 50 cycles or less

<Output characteristics test>

For the above-described non-aqueous electrolytic solution secondary battery for test, after charging under the following conditions, the discharge capacity in a case of discharging under the following conditions was measured, and output characteristics were examined.

(Reference discharge capacity)

CC-CV charging: current value of 250 mA, upper limit voltage of 3.9 V, termination current value of 25 mA
CC discharging: current value of 250 mA, termination voltage value of 2.0 V

(High current discharge capacity)

CC-CV charging: current value of 250 mA, upper limit voltage of 3.9 V, termination current value of 25 mA
CC discharging: current value of 1,000 mA, termination voltage value of 2.0 V

A discharge capacity retention rate calculated by the following expression was applied to the following evaluation standard to evaluate the output characteristics.

Discharge capacity retention rate (%) = (High current discharge capacity/Reference discharge capacity) × 100

(Evaluation standard)

A: 70% or more

B: 60% or more and less than 70%

C: 55% or more and less than 60%

D: 50% or more and less than 55%

E: less than 50%

The results of each test are shown in the table below. In the following table, in the negative electrode slurry layer, the extent to which the additive (VC) in the non-aqueous electrolytic solution during battery production remains after the charging and discharging before test (the residual amount = the concentration of the additive in the negative electrode slurry layer after the charging and discharging before test; % by mass) is also shown.

[Table 3]

| | Positive slurry layer | | Separator | Negative slurry layer | | Test result | | VC residual amount (% by mass) |
|---|---|---|---|---|---|---|---|---|
| | Non-aqueous electrolytic solution No. | Thickness (μm) | | Non-aqueous electrolytic solution No. | Thickness (μm) | Cycle characteristics | Output characteristics | |
| B1 | E1 | 500 | Wet PE | E0 | 500 | A | A | 2 |
| B2 | E1 | 500 | Wet PE | E4 | 500 | B | A | 1 |
| B3 | E1 | 100 | Wet PE | E0 | 100 | B | B | 2 |
| B4 | E2 | 500 | Wet PE | E0 | 500 | B | A | 2 |
| B5 | E3 | 500 | Wet PE | E0 | 500 | B | A | 1 |
| B6 | E4 | 500 | Wet PE | E0 | 500 | A | C | 2 |
| B7 | E5 | 500 | Wet PE | E0 | 500 | B | C | 1 |
| B8 | E6 | 500 | Wet PE | E0 | 500 | C | A | < 0.1 |
| B9 | E7 | 500 | Wet PE | E0 | 500 | A | A | 10 |
| B10 | E8 | 500 | Wet PE | E0 | 500 | A | C | 15 |
| B11 | E9 | 500 | Wet PE | E0 | 500 | B | C | 1 |
| B12 | E1 | 500 | Polymer electrolyte 1 | E4 | 500 | A | A | 2 |
| B13 | E1 | 500 | Polymer electrolyte 2 | E4 | 500 | B | A | 2 |
| B14 | E1 | 500 | Inorganic coating PE | E0 | 500 | A | A | 2 |
| B15 | E1 | 500 | Dry PE | E4 | 500 | C | A | 2 |
| B16 | Not added | 500 | Wet PE | Not added | 500 | A | A | 1 |
| B17 | Not added | 500 | Polymer electrolyte 1 | Not added | 500 | A | A | 1 |
| B18 | E1 | 500 | Wet PE | E4 | 500 | A | A | 0.5 |
| B19 | E1 | 500 | Wet PE | E10 | 500 | B | B | 2 |
| B20 | E11 | 500 | Wet PE | E0 | 500 | A | A | 2 |
| B21 | E11 | 500 | Wet PE | E12 | 500 | B | A | 2 |
| B22 | E13 | 500 | Wet PE | E0 | 500 | A | A | 2 |
| B23 | E13 | 500 | Wet PE | E14 | 500 | B | A | 2 |

(continued)

| | Positive slurry layer | | Separator | Negative slurry layer | | Test result | | VC residual amount (% by mass) |
|---|---|---|---|---|---|---|---|---|
| | Non-aqueous electrolytic solution No. | Thickness (μm) | | Non-aqueous electrolytic solution No. | Thickness (μm) | Cycle characteristics | Output characteristics | |
| B24 | E15 | 500 | Wet PE | E0 | 500 | A | A | 1 |
| HB1 | E1 | 500 | PE | E1 | 500 | E | A | < 0.1 |
| HB2 | E0 | 500 | PE | E0 | 500 | A | E | 2 |

Details of the separator in the above table are shown below.

· Wet PE: SW320F (product name, manufactured by Senior)
· Polymer electrolyte 1: polymer electrolyte in which Li ions were conducted by hopping was prepared with reference to US2020/0358107A and J. Am. Chem. Soc. 2020, 142, pp. 3301 to 3305, and a separator was prepared therefrom; specifically, a separator having a thickness of 20 μm was obtained based on the section of Preparation Of solid polymer electrolytes in supporting information of J. Am. Chem. Soc. 2020, 142, pp. 3301 to 3305.
· Polymer electrolyte 2: polymer electrolyte was prepared by using polyethylene oxide (weight-average molecular weight: 500,000) manufactured by FUJIFILM Wako Pure Chemical Corporation and LiFSI according to the following procedure; 50 g of the polyethylene oxide and 70 g of LiFSI were dissolved in tetrahydrofuran, and the solution was applied onto a polytetrafluoroethylene (PTFE) film using a blade so that the dry film thickness was 20 μm; after drying, the polyethylene oxide film was peeled off from the PTFE film, and used as a separator.
· Inorganic coating PE: SH716W14 (product name, manufactured by Senior)
· Dry PE: CE2500 (product name, manufactured by Celgard LLC.)

As shown in the above table, in relation to the embodiment 2 of the manufacturing method according to the embodiment of the present invention, in a case where the proportion of the high-dielectric constant and low-viscosity solvent with respect to the solvents of the slurry for a positive electrode, used for forming the positive electrode slurry layer, and the proportion of the high-dielectric constant and low-viscosity solvent with respect to the solvents of the slurry for a negative electrode, used for forming the negative electrode slurry layer, were the same, the obtained non-aqueous electrolytic solution secondary battery had deteriorated cycle characteristics (Comparative Example HB1). In addition, in a case where the high-dielectric constant and low-viscosity solvent was not used in the non-aqueous electrolytic solution, the obtained non-aqueous electrolytic solution secondary battery had deteriorated output characteristics (Comparative Example HB2).

On the other hand, the non-aqueous electrolytic solution secondary batteries obtained by the manufacturing method according to the embodiment of the present invention all had excellent cycle characteristics and excellent output characteristics.

In addition, regarding the embodiment 2 of the manufacturing method according to the embodiment of the present invention, it was found that, in a case where a polymer electrolyte which was difficult to permeate a solvent was used as the separator, both the cycle characteristics and the output characteristics could be achieved at a higher level. On the contrary, in a case where the dry PE which was likely to permeate a solvent was used as the separator, the cycle characteristics were slightly deteriorated as compared with a case where the wet PE or the polymer electrolyte was used as the separator.

In addition, it was also found that, in the non-aqueous electrolytic solution secondary batteries obtained by the manufacturing method according to the embodiment of the present invention, the additive forming the coating film on the negative electrode was likely to remain in the electrolytic solution even after the cycle test (comparison with Comparative Example HB1).

[Test Example 2]

<Manufacturing suitability test>

Positive electrode layer members C-1 to C-16 were obtained in the same manner as in the preparation of the positive electrode layer member in Example B1, except that the non-aqueous electrolytic solution to be used was as shown

in the table below and the conditions were as follows. Specifically, the slurry was applied in a dry environment (dew point: -40°C, room temperature: 25°C), moved to a low temperature environment within 10 seconds, and then left under a low temperature condition (5°C) for 2 minutes. Thereafter, the surface of the electrode slurry layer was visually observed, the state of breakage or defect was examined, and manufacturing suitability was evaluated according to the following evaluation standard. In a case where the electrode slurry layer had a defect, the yield deteriorated due to the peeling of the electrode slurry layer during the lamination in the battery production. The manufacturing suitability test is an indicator of the yield. The results are shown in the table below.

(Evaluation standard)

A: no breakage and no defect were observed.
B: slightly breakage or defect was observed.
C: clear defect was observed at the end part.

[Table 4]

| Positive electrode layer member No. | Non-aqueous electrolytic solution No. | Manufacturing suitability |
|---|---|---|
| C-1 | E1 | B |
| C-2 | E2 | C |
| C-3 | E3 | C |
| C-4 | E4 | B |
| C-5 | E5 | B |
| C-6 | E6 | B |
| C-7 | E7 | B |
| C-8 | E8 | B |
| C-9 | E9 | B |
| C-10 | E10 | B |
| C-11 | E11 | A |
| C-12 | E12 | A |
| C-13 | E13 | A |
| C-14 | E14 | A |
| C-15 | E15 | B |
| C-16 | E0 | A |

From the above results, it was also found that, in a case where a solvent having a relative permittivity of 10 or more is used as the high-dielectric constant and low-viscosity solvent, the manufacturing suitability was improved. In addition, it was also found that, in a case where propionitrile or isobutyronitrile, having a boiling point of 90°C or higher, was used, the manufacturing suitability was further improved.

The present invention has been described with the embodiments thereof, any details of the description of the present invention are not limited unless described otherwise, and it is obvious that the present invention is widely construed without departing from the gist and scope of the present invention described in the accompanying claims.

The present application claims the priority of JP2022-136375 filed in Japan on August 29, 2022, the contents of which are incorporated herein by reference, as a part of the description of the present specification.

Explanation of References

10: non-aqueous electrolytic solution secondary battery
1: negative electrode collector
2: negative electrode active material layer
3: separator
4: positive electrode active material layer
5: positive electrode collector

## Claims

**1.** A manufacturing method of a non-aqueous electrolytic solution secondary battery, comprising the following (a1) to (c1):

(a1) obtaining a positive electrode layer member consisting of a laminate of a positive electrode collector and a positive electrode slurry layer obtained by dispersing a positive electrode active material in a non-aqueous electrolytic solution in which at least a part of solvents has a relative permittivity of 5.0 or more and a viscosity of less than 2.0 mPa·s;
(b1) forming a laminated structure of a negative electrode collector and a slurry layer for a negative electrode, which is obtained by dispersing a negative electrode active material in a non-aqueous electrolytic solution in which a solvent has a relative permittivity of less than 5.0 and/or a viscosity of 2.0 mPa·s or more, and obtaining a negative electrode layer member consisting of a laminate of the negative electrode collector and a negative electrode slurry layer by adding, to the slurry layer for a negative electrode, a solvent having a relative permittivity of 5.0 or more and a viscosity of less than 2.0 mPa·s; and
(c1) laminating the positive electrode layer member, a separator, and the negative electrode layer member to form a laminated structure in which one side of the separator and the positive electrode slurry layer are in contact with each other and the other side of the separator and the negative electrode slurry layer are in contact with each other.

**2.** A manufacturing method of a non-aqueous electrolytic solution secondary battery, comprising the following (a2) to (c2):

(a2) obtaining a positive electrode layer member consisting of a laminate of a positive electrode collector and a positive electrode slurry layer obtained by dispersing a positive electrode active material in a non-aqueous electrolytic solution in which a proportion of a solvent having a relative permittivity of 5.0 or more and a viscosity of less than 2.0 mPa·s with respect to solvents is X% by mass;
(b2) obtaining a negative electrode layer member consisting of a laminate of a negative electrode collector and a negative electrode slurry layer obtained by dispersing a negative electrode active material in a non-aqueous electrolytic solution in which a proportion of a solvent having a relative permittivity of 5.0 or more and a viscosity of less than 2.0 mPa·s with respect to solvents is lower than X% by mass; and
(c2) laminating the positive electrode layer member, a separator, and the negative electrode layer member to form a laminated structure in which one side of the separator and the positive electrode slurry layer are in contact with each other and the other side of the separator and the negative electrode slurry layer are in contact with each other.

**3.** The manufacturing method of a non-aqueous electrolytic solution secondary battery according to claim 1 or 2, wherein, in the laminated structure formed by (c1) and (c2), a thickness of the positive electrode slurry layer is 150 μm or more.

**4.** The manufacturing method of a non-aqueous electrolytic solution secondary battery according to claim 1 or 2, wherein the solvent having a relative permittivity of 5.0 or more and a viscosity of less than 2.0 mPa·s includes a compound having at least one of a cyano group, an ester bond, or an ether bond.

**5.** The manufacturing method of a non-aqueous electrolytic solution secondary battery according to claim 4,

wherein the compound having at least one of a cyano group, an ester bond, or an ether bond is a compound represented by any one of Formulae (1) to (3),

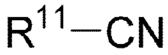

Formula (1)

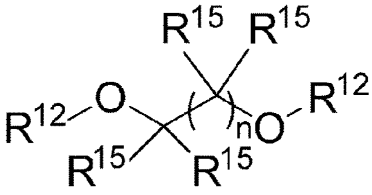

Formula (2)

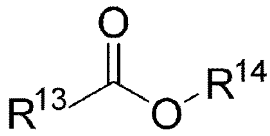

Formula (3)

in the formulae, $R^{11}$ to $R^{14}$ represent an alkyl group having 1 to 3 carbon atoms, $R^{15}$ represents a hydrogen atom or a fluorine atom, and n represents an integer of 1 to 3, in Formula (2), two $R^{12}$'s may be linked to each other to form a ring, in Formula (3), $R^{13}$ and $R^{14}$ may be linked to each other to form a ring.

**6.** The manufacturing method of a non-aqueous electrolytic solution secondary battery according to claim 1 or 2, wherein, in (a1) and (a2), an ion conductivity of the non-aqueous electrolytic solution constituting the positive electrode slurry layer is 12 mS/cm or more.

**7.** The manufacturing method of a non-aqueous electrolytic solution secondary battery according to claim 1 or 2, wherein a content of an electrolyte in the non-aqueous electrolytic solution constituting the positive electrode slurry layer in (a1) and (a2) and a content of an electrolyte in the non-aqueous electrolytic solution constituting the negative electrode slurry layer in (b1) and (b2) are 0.9 M or more.

**8.** The manufacturing method of a non-aqueous electrolytic solution secondary battery according to claim 1 or 2, wherein an additive which reacts with a surface of the negative electrode active material to form a coating film is added to the non-aqueous electrolytic solution constituting the positive electrode slurry layer in (a1) and (a2) and to the non-aqueous electrolytic solution constituting the negative electrode slurry layer in (b1) and (b2).

**9.** The manufacturing method of a non-aqueous electrolytic solution secondary battery according to claim 8, wherein a content of the additive in the non-aqueous electrolytic solution constituting the positive electrode slurry layer and in the non-aqueous electrolytic solution constituting the negative electrode slurry layer is 2% to 28% by mass.

**10.** The manufacturing method of a non-aqueous electrolytic solution secondary battery according to claim 2, wherein, in the negative electrode slurry layer in (b2), the proportion of the solvent having a relative permittivity of 5.0 or more and a viscosity of less than 2.0 mPa·s with respect to the solvents is less than 20% by mass.

**11.** The manufacturing method of a non-aqueous electrolytic solution secondary battery according to claim 1 or 2, further comprising, after (c1) and (c2):
performing CV charging at a potential higher than a reduction potential of the solvent having a relative permittivity of 5.0 or more and a viscosity of less than 2.0 mPa·s.

**12.** The manufacturing method of a non-aqueous electrolytic solution secondary battery according to claim 1 or 2, wherein both the positive electrode slurry layer and the negative electrode slurry layer in the obtained non-aqueous electrolytic solution secondary battery contain acetonitrile.

**13.** A slurry for a non-aqueous electrolytic solution secondary battery, comprising:

a non-aqueous electrolytic solution containing a solvent having a relative permittivity of 5.0 or more and a viscosity of less than 2.0 mPa·s; and
an electrode active material.

**14.** The slurry for a non-aqueous electrolytic solution secondary battery according to claim 13, wherein the electrode active material is a positive electrode active material, and a proportion of the solvent having a relative permittivity of 5.0 or more and a viscosity of less than 2.0 mPa·s with respect to solvents is 8% by mass or more.

**15.** The slurry for a non-aqueous electrolytic solution secondary battery according to claim 13, wherein the electrode active material is a negative electrode active material, and a proportion of the solvent having a relative permittivity of 5.0 or more and a viscosity of less than 2.0 mPa·s with respect to solvents is less than 20% by

mass.

**16.** The slurry for a non-aqueous electrolytic solution secondary battery according to any one of claims 13 to 15, wherein a content of the electrode active material in the slurry is 40% by volume or more.

**17.** The slurry for a non-aqueous electrolytic solution secondary battery according to any one of claims 13 to 15, wherein the solvent having a relative permittivity of 5.0 or more and a viscosity of less than 2.0 mPa·s includes acetonitrile.

**18.** The slurry for a non-aqueous electrolytic solution secondary battery according to any one of claims 13 to 15, wherein the slurry is used for forming an electrode slurry layer of a non-aqueous electrolytic solution secondary battery.

**19.** A non-aqueous electrolytic solution secondary battery comprising, in the following order:

a positive electrode slurry layer;
a separator; and
a negative electrode slurry layer,
wherein the positive electrode slurry layer consists of a slurry obtained by dispersing a positive electrode active material in a non-aqueous electrolytic solution containing a solvent having a relative permittivity of 5.0 or more and a viscosity of less than 2.0 mPa·s, and
the negative electrode slurry layer consists of a slurry obtained by dispersing a negative electrode active material in a non-aqueous electrolytic solution containing a solvent having a relative permittivity of 5.0 or more and a viscosity of less than 2.0 mPa·s.

**20.** The non-aqueous electrolytic solution secondary battery according to claim 19,
wherein both the solvent having a relative permittivity of 5.0 or more and a viscosity of less than 2.0 mPa·s, contained in the positive electrode slurry layer, and the solvent having a relative permittivity of 5.0 or more and a viscosity of less than 2.0 mPa·s, contained in the negative electrode slurry layer, include acetonitrile.

**21.** The non-aqueous electrolytic solution secondary battery according to claim 19 or 20,
wherein, in a case where a proportion of the solvent having a relative permittivity of 5.0 or more and a viscosity of less than 2.0 mPa·s with respect to solvents of the positive electrode slurry layer is denoted by $X^a$% by mass and a proportion of the solvent having a relative permittivity of 5.0 or more and a viscosity of less than 2.0 mPa·s with respect to solvents of the negative electrode slurry layer is denoted by $X^b$% by mass, $X^a > X^b$ is satisfied.

FIG. 1

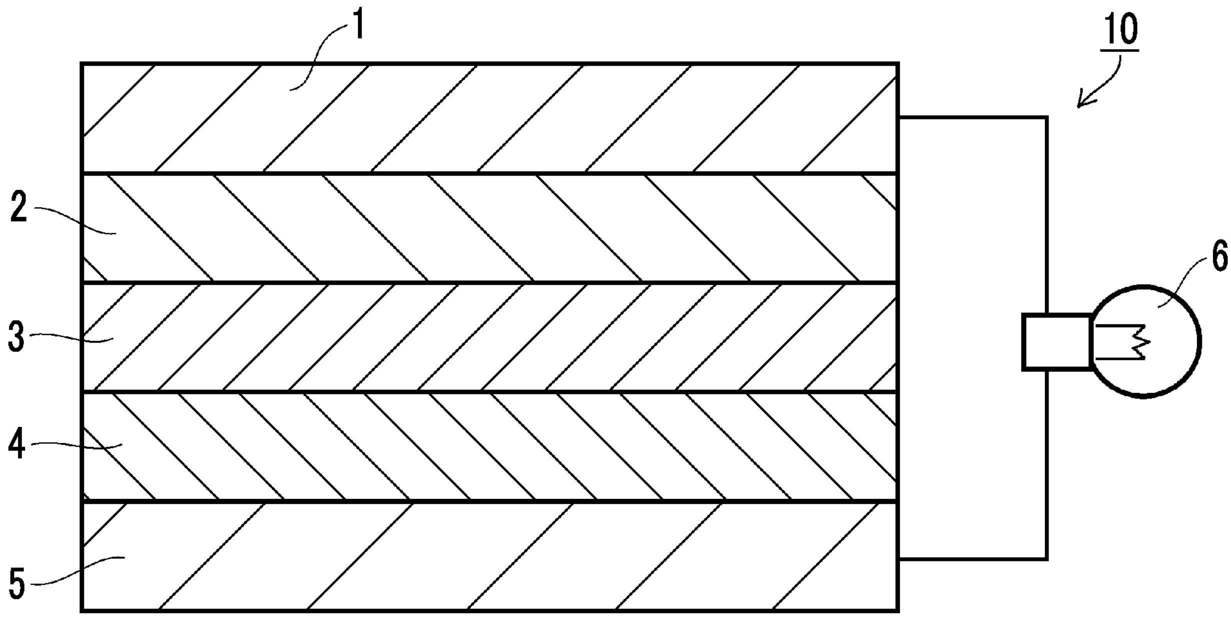

## INTERNATIONAL SEARCH REPORT

International application No.
**PCT/JP2023/029815**

**A. CLASSIFICATION OF SUBJECT MATTER**

***H01M 10/0585***(2010.01)i; ***H01M 4/13***(2010.01)i; ***H01M 4/139***(2010.01)i; ***H01M 4/36***(2006.01)i; ***H01M 4/62***(2006.01)i; ***H01M 10/052***(2010.01)i
FI: H01M10/0585; H01M4/139; H01M4/62 Z; H01M4/36 C; H01M4/13; H01M10/052

According to International Patent Classification (IPC) or to both national classification and IPC

**B. FIELDS SEARCHED**

Minimum documentation searched (classification system followed by classification symbols)

H01M10/0585; H01M4/13; H01M4/139; H01M4/36; H01M4/62; H01M10/052

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2020/059550 A1 (FUJIFILM CORPORATION) 26 March 2020 (2020-03-26) | 1-21 |
| A | JP 2008-218385 A (SONY CORP) 18 September 2008 (2008-09-18) | 1-21 |
| A | WO 2019/088088 A1 (ADEKA CORPORATION) 09 May 2019 (2019-05-09) | 1-21 |
| A | JP 2005-50755 A (NISSAN MOTOR CO LTD) 24 February 2005 (2005-02-24) | 1-21 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 October 2023** | **17 October 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/029815**

| Patent document cited in search report | Publication date (day/month/year) | Patent family member(s) | Publication date (day/month/year) |
|---|---|---|---|
| WO 2020/059550 A1 | 26 March 2020 | (Family: none) | |
| JP 2008-218385 A | 18 September 2008 | US 2008/0241705 A1<br>CN 101356668 A<br>KR 10-2009-0058472 A | |
| WO 2019/088088 A1 | 09 May 2019 | US 2021/0194005 A1<br>EP 3706210 A1<br>CN 111247674 A<br>KR 10-2020-0081370 A | |
| JP 2005-50755 A | 24 February 2005 | US 2006/0251965 A1<br>EP 1652246 A1<br>KR 10-2006-0033920 A<br>CN 1830102 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2017147222 A
- JP 2016201308 A
- JP 2005108835 A
- JP 2012185938 A
- US 20200358107 A
- JP 2022136375 A


### Non-patent literature cited in the description


- *J. Am. Chem. Soc.*, 2020, vol. 142, 3301-3305